# EUROPEAN PATENT SPECIFICATION

(11) **EP 0 744 341 B1**
(45) Date of publication and mention of the grant of the patent: **13.03.2002**
(21) Application number: 96108158.5
(22) Date of filing: 22.05.1996
(51) Int. Cl.: B65B 9/02

(54) **Method and apparatus for wrapping sheets**
Verfahren und Vorrichtung zum Umhüllen von Blättern
Procédé et appareil pour envelopper des feuilles

(30) Priority: 23.05.1995 JP 12410995
(43) Date of publication of application: 27.11.1996
(73) Proprietor: Sumitomo Chemical Company, Limited, Chuo-ku Osaka 541-8550 (JP); Sanjo Machine Works Ltd., Minamikanbara-gun, Niigata 959-11 (JP)
(72) Inventor: Yamaguchi, Takayuki, Niihama-shi, Ehime 792 (JP); Kume, Takanori, Ichihara-shi, Chiba 299-01 (JP); Kayano, Yasuhiro, c/o Sanjo Machine Works Ltd., Minamikanbara-gun, Niigata 959-11 (JP); Higuchi, Tomio, c/o Sanjo Machine Works Ltd., Minamikanbara-gun, Niigata 959-11 (JP)
(74) Representative: VOSSIUS & PARTNER

(56) References cited:
- EP-A- 0 320 814
- DE-A- 2 704 350
- DE-A- 4 041 743
- GB-A- 1 066 963
- US-A- 4 841 712

## Description

The present invention relates to a method and apparatus of producing a sheet wrapping body wrapping a sheet material, such as an oxygen absorbing sheet.

Wrapping materials for sealing foods or the like airtight contain an oxygen absorbing agent to keep the contents fresh. In case that powders or particles of the oxygen absorbing agent are used, the agent is sealed in a small package. However, besides the fact that the package is bulky, the agent comes out from the package and mixes with the foods if the sealing is not tight enough, or a lump of the agent in the package is set on the surface and remains inactive inside, causing serious damages.

A sheet of oxygen absorbing agent, generally called as an oxygen absorbing sheet, is known as a solution of the above problems. An example oxygen absorbing sheet is disclosed in Japanese Laid-open Patent Application Nos. 55-116436 (1980) and 62-234544 (1987), and the sheet is wrapped up in a small package made of a coating sheet.

An oxygen absorbing sheet wrapped up in a coating sheet, or sheet wrapping body, is produced by an apparatus different from those used for producing a package filled with powders or particles for the oxygen absorbing agent. An example apparatus of producing such a sheet wrapping body is disclosed in above-mentioned Japanese Laid-open Patent Application No. 55-116436. More specifically, a sheet material subject to wrapping is cut out from a strip of a sheet by a cut blade moving up and down, then the sheet material is sealed as being wrapped up in coating sheets- supplied from above and underneath, and then the sealed portion is cut out by another cut blade moving up and down.

According to the above structure, however, both the cut means for cutting out the sheet material from the strip sheet and for cutting out the sheet wrapping body from the coating sheets are respectively cut blades moving up and down. This limits streamlining the production, and for this reason, the above structure is not preferable to mass-produce the sheet wrapping bodies.

US-A-4 481 712 relates to a method of producing sealed protective pouches with a premium object enclosed therein. A printed web having a backing sheet removably adhered thereto is continuously positioned on a carrier sheet having an adhesive coating, with the backing sheet in contact with the coating. Then the web and backing sheet are die-cut to produce a plurality of spaced-apart premium objects on the carrier sheet and a waste matrix which is then removed. A top sheet is then positioned over the premium objects with marginal portions of the top sheet adhering to corresponding marginal portions of the carrier sheet to form a continuous seal surrounding the premium objects and to form sealed protective pouches enclosing the premium objects.

It is therefore an object of the present invention to provide a method and apparatus of mass producing sheet wrapping bodies at high speed. This object is achieved by the features of claims 1 and 22, respectively.

According to the above structure, the sheet material subject to wrapping supplied from its supply unit is cut out by the first pair of rotating rollers of the first cut unit and the cut-out portions are made into the sheet tips subject to wrapping. The sheet tips subject to wrapping are transported while being held in such a manner not to cause misalignment. On the other hand, a strip of the bottom coating material is supplied onto the transportation surface from the bottom coating material supply unit, and the sheet tips subject to wrapping are sequentially placed on the bottom coating material. Then, a strip of the top coating material is supplied on the sheet tips subject to wrapping from the top coating material supply unit. Thus, the sheet tips subject to wrapping are sandwiched by the bottom coating material and top coating material, and transported further to the seal unit to the second cut unit in such a manner not to cause misalignment. Then, the bottom coating material and top coating material are sealed by the seal unit to wrap up each sheet tip subject to wrapping, and the sealed portion is cut by the third pair of rotating rollers of the second cut unit to produce the sheet wrapping bodies each respectively wrapping the sheet tip subject to wrapping.

As has been explained, the sheet tips subject to wrapping are cut out from the sheet material subject to wrapping by the first cut unit, the top coating material and bottom coating material are sealed while wrapping up the sheet tips subject to wrapping, and the sheet wrapping bodies are cut out from the sealed sheet. Since each of the above three units comprises a pair of rotating rollers, the above actions can be carried out in succession at high speeds.

Also, to ensure such a successive and fast operation, the sheet tips subject to wrapping are transported from the first cut unit by the transportation unit while being held in such a manner not to cause alignment. In addition, the sheet tips subject to wrapping sandwiched by the top coating material and bottom coating material are transported forward without causing misalignment together with both the top coating material and bottom coating material. As a result, the sheet wrapping bodies can be produced at high speeds.

According to the method defined in claim 22, the sheet tips subject to wrapping are cut out from the sheet material subject to wrapping by the first cut unit, the top coating material and bottom coating material are sealed while wrapping up the sheet tips subject to wrapping individually, and the sheet wrapping bodies are cut out from the sealed portion. Since each of the above three units comprises a pair of rotating rollers, the above actions can be carried out in succession at high speeds, thereby making it possible to produce the sheet wrapping bodies at high speeds.

For a fuller understanding of the nature and advantages of the invention, reference should be made to the ensuing detailed description taken in conjunction with the accompanying drawings.

### BRIEF DESCRIPTION OF THE DRAWINGS

Figure 1 is a schematic view showing the entire structure of a sheet wrapping body producing apparatus in accordance with an example embodiment of the present invention;
Figure 2 is a longitudinal section of an anvil roller of Figure 1;
Figure 3 is a schematic front view showing a structure around a rotating drum of the anvil roller of Figure 2;
Figure 4 is a longitudinal section of a delivery drum unit of Figure 1;
Figure 5 is a schematic front view of a first transportation belt unit of Figure 1;
Figure 6 is a schematic front view of a second transportation belt unit of Figure 1;
Figure 7 is a plan view of a major portion showing the relationship between the position of round belts of a round belt unit of Figure 5 and a diameter of an oxygen absorbing sheet tip;
Figure 8 is a front view of a major portion showing the relationship between the position of a guide roller with respect to the round belt unit of Figure 5 and a diameter of an oxygen absorbing sheet tip;
Figure 9 is a plan view of a major portion showing the relationship between the position of the round belts of the round belt unit of Figure 5 and a diameter of an oxygen absorbing sheet tip;
Figure 10 is a view explaining the correspondence between major means of Figure 1 and the producing steps of a sheet wrapping body;
Figure 11 is a view showing the entire structure of a sheet wrapping body producing apparatus in accordance with another example embodiment of the present invention;
Figure 12 is a view detailing the structure of a second half stage of the sheet wrapping body producing apparatus of Figure 11;
Figure 13 is a block diagram depicting a control system provided in the sheet wrapping body producing apparatus of Figure 11;
Figure 14 is a magnified view of a second transportation belt unit of Figure 12;
Figure 15 is a magnified view around a translucent defective body detecting section of Figure 12;
Figure 16 is a magnified front view of a second defective body collecting section of Figure 12;
Figure 17 is a magnified view around an alignment screw unit of Figure 12;
Figure 18 is a plan view of the alignment screws of the alignment screw unit of Figure 12; and
Figure 19 is a view explaining an operation of a quota transportation unit of Figure 18.

### DESCRIPTION OF THE EMBODIMENTS

### (First Embodiment)

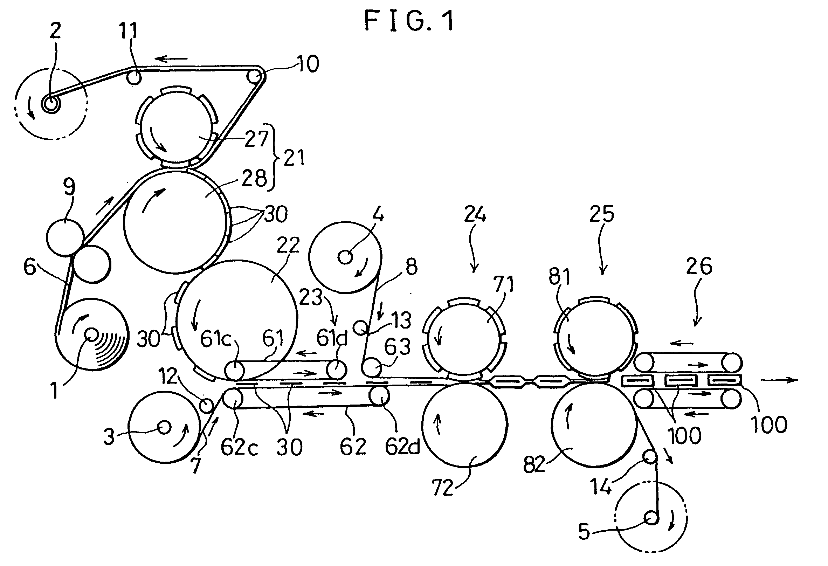

Referring to Figures 1 through 10, the following description will describe an example embodiment of the present invention.

A sheet wrapping body producing apparatus in accordance with the present embodiment produces an oxygen absorbing sheet wrapping body. As shown in Figure 1, the sheet wrapping body producing apparatus includes an oxygen absorbing sheet supply shaft 1, a used oxygen absorbing sheet take-up shaft 2, a breathing layer sheet supply shaft 3, a cover film supply shaft 4, and a used coating sheet take-up shaft 5. Note that the oxygen absorbing sheet supply shaft 1 and used oxygen absorbing sheet take-up shaft 2 form a supply unit of a sheet subject to wrapping; the breathing layer sheet supply shaft 3 and used coating sheet take-up shaft 5 form a bottom coating material supply unit; and the cover film supply shaft 4 and used coating sheet take-up shaft 5 form a top coating material supply unit. Each shaft is driven by unillustrated driving means in the direction indicated by an arrow.

The oxygen absorbing sheet supply shaft 1, breathing layer sheet supply shaft 3, and cover film supply shaft 4 respectively hold a roll of oxygen absorbing strip sheet 6 (sheet material subject to wrapping), a roll of breathing layer strip sheet 7 (bottom coating material), and a roll of strip cover film 8 (top coating material). The oxygen absorbing strip sheet 6 is supplied from the oxygen absorbing sheet supply shaft 1 by way of a nip roller 9, and reeled up by the used oxygen absorbing sheet take-up shaft 2 by way of guide rollers 10 and 11. The breathing layer strip sheet 7 is supplied from the breathing layer sheet supply shaft 3 by way of a guide roller 12, while the strip cover film 8 is supplied from the cover film supply shaft 4 by way of a guide roller 13. Both the breathing layer strip sheet 7 and strip cover film 8 are reeled up by the used covering sheet take-up shaft 5 by way of a guide roller 14.

The oxygen absorbing strip sheet 6 referred herein is, for example, a strip sheet of a kneaded product of iron-based oxygen absorbing agent powders and a resin material. Incidentally, commercially available oxygen absorbing sheets or oxygen absorbing sheet wrapping bodies include two types depending on the use thereof: a moisture depending type and a self-reacting type. The former absorbs oxygen in the presence of moisture, and examples of which are disclosed in Japanese Laid-open Patent Application Nos. 5-237380 (1993) and 5-318574 (1993). The latter comprises a moisture-dependent oxygen absorbing sheet and a hydrous water supply sheet laminated to the oxygen absorbing sheet so that it withholds moisture, and an example of which is disclosed in Japanese Laid-open Patent Application No. 2-203937 (1990). The sheet wrapping body producing apparatus of the present embodiment produces sheet wrapping bodies of the moisture depending type.

The breathing layer strip sheet 7 renders ventilation to enable the oxygen absorbing sheet (sheet material subject to wrapping), to absorb oxygens under normal use. In contrast, the strip cover film 8 renders no ventilation. All of the oxygen absorbing strip sheet 6, breathing layer strip sheet 7, and strip cover film 8 of the present embodiment are 100mm wide.

The sheet wrapping body producing apparatus of the present embodiment further includes a first rotary die cut unit 21 (a first cut unit), a delivery drum unit 22 (second attracting roller), a first transportation belt unit 23, a rotary seal unit 24 (a seal unit), a second rotary die cut unit 25 (a second cut unit), and a second transportation belt unit 26. The components 21 through 26 are lined up sequentially. Note that the delivery drum unit 22 and first transportation belt unit 23 form a transportation unit.

The first rotary die cut unit 21 includes a cut roller 27 and an anvil roller 28 (first attracting roller), which are slightly spaced apart and oppose each other vertically. The first rotary die cut unit 21 cuts out oxygen absorbing sheet tips 30 (sheet tips subject to wrapping) from the oxygen absorbing sheet 6 supplied through a space between the two rollers 27 and 28 as they rotate. The first rotary die cut unit 21 functions in a known manner as is disclosed, for example, in Japanese Examined Patent Publication Nos. 52-20718 (1977), 6-57373 (1994), and 6-41070 (1994). However, the first rotary die cut unit 21 further includes the mechanism described below.

The first rotary die cut unit 21 cuts out 50-mm-dia oxygen absorbing sheet tips 30 from the oxygen absorbing strip sheet 6 continuously in a direction in which the first rotary die cut unit 21 rotates without leaving any unwanted space between every two adjacent oxygen absorbing sheet tips 30.

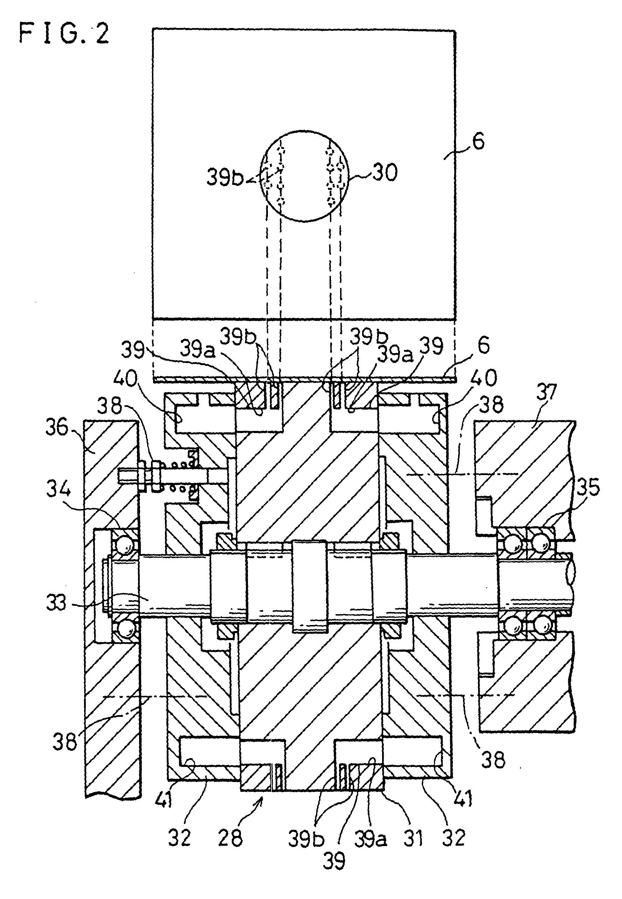

As shown in Figure 2, the anvil roller 28 includes a rotating drum section 31 and two blow ring sections 32 provided to the two opposing sides of the rotating drum section 31, respectively. The rotating drum section 31 is attached to a rotational axis 33 driven by unillustrated driving means. The rotational axis 33 is supported by fixing members 36 and 37 through bearings 34 and 35 at the both ends, respectively. A plurality of connecting members 38 are provided respectively between the fixing members 36 and 37 and the two blow ring sections 32 to disallow both the blow ring sections 32 to rotate.

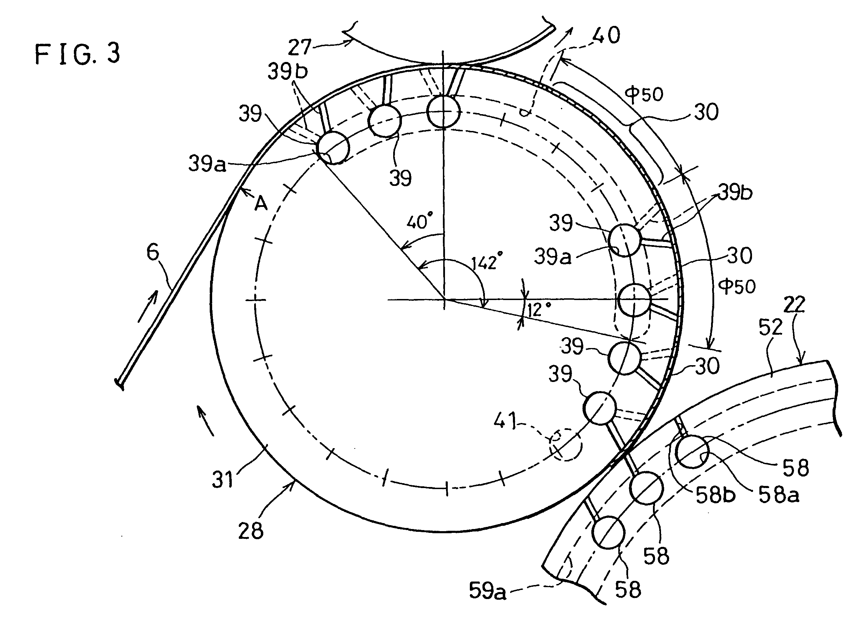

The rotating drum section 31 includes a plurality of separate suction sections 39. The suction sections 39 are formed in two columns along the circumference of the rotating drum section 31 at regular pitches. Each suction section 39 comprises a circular hole portion 39a and two nozzle portions 39b. The circular hole portion 39a extends toward the inside of the rotating drum section 31 from the side surface thereof. The nozzel portions 39b are holes extending from the circular hole portion 39a to the outer surface of the rotating drum section 31, whose diameters are smaller than that of the circular hole portion 39a. As shown in Figure 3, the two nozzle portions 39b are made through in a V-shape if seen from the side surface of the rotating drum section 31. As shown in Figure 2, the opening of each nozzle portion 39b across the outer surface of the rotating drum section 31 is located within the diameter of the oxygen absorbing sheet tip 30 transported forward by the rotating drum section 31 at the center across the outer surface thereof.

Each blow ring section 32 includes a negative pressure area setting groove 40 (negative pressure supply path to the suction sections 39) and a positive pressure supply hole 41 (positive pressure supply path to a single suction section 39). The negative pressure area setting groove 40 is connected to an unillustrated air vacuuming unit, while the positive pressure supply hole 41 is connected to an unillustrated air supplying unit. Both the negative pressure area setting groove 40 and positive pressure supply hole 41 extend from the side surface near the rotating drum section 31 side toward the other side surface. As shown in Figure 3, the negative pressure area setting groove 40 extends in a direction in which the anvil roller 28 rotates at an angle of approximately 142 degrees from a point slightly ahead of the contacting point A where the anvil roller 28 touches the oxygen absorbing strip sheet 6. Thus, the outer surface of the anvil roller 28 over the negative pressure area setting groove 40 develops an attracting force.

The positive pressure supply hole 41 is a circular hole and connected to the circular hole portion 39a of one suction section 39 alone. As shown in Figure 3, the positive pressure supply hole 41 is positioned at the lower stream with respect to a direction in which the rotating drum unit 31 rotates from the center of an area where the delivery drum unit 22 and rotating drum unit 31 oppose each other.

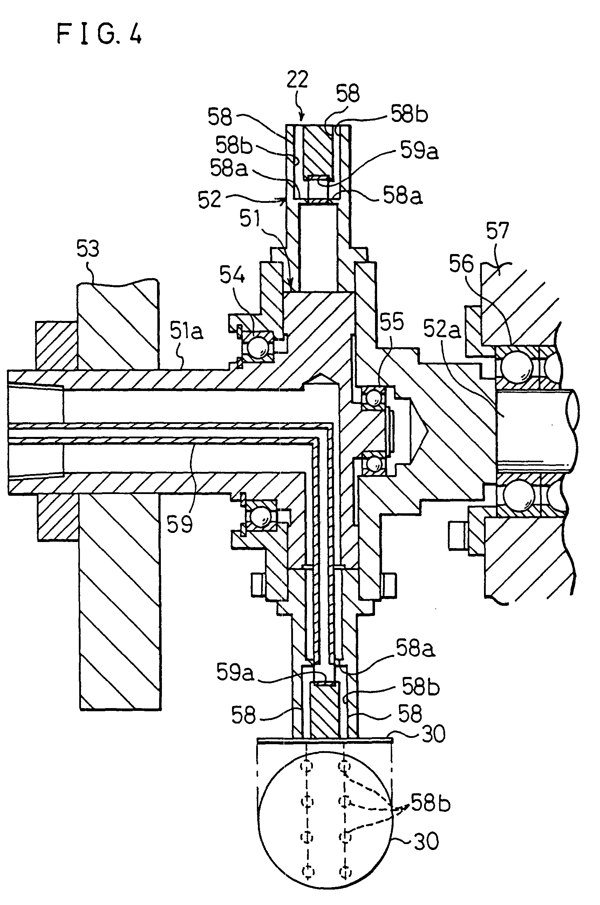

As shown in Figure 4, the delivery drum unit 22 includes a fixing roller 51 and a rotating roller 52 attached to the outer surface of the fixing roller 51. An axial section 51a of the fixing roller 51 is fixed to a fixing member 53 to inhibit the rotation of the fixing roller 51. The rotating roller 52 is attached to the fixing roller 51 through bearings 54 and 55, and an axial section 52a thereof is supported by a fixing member 57 through a bearing 56. The axial section 52a is driven by unillustrated driving means.

Like the rotating drum section 31, the rotating roller 52 includes a plurality of separate suction sections 58 as shown in Figure 4. The suction sections 58 are formed in two columns along the circumference of the rotating roller 52 at regular pitches. Each suction section 58 comprises a circular hole portion 58a and a nozzle portion 58b. The nozzel portions 58b is a hole extending from the circular hole portion 58a to the outer surface of the rotating roller 52, whose diameter is smaller than that of the circular hole portion 58a. As shown in Figure 4, the opening of each nozzle portion 58b across the outer surface of the rotating roller section 52 is located within the diameter of the oxygen absorbing sheet tip 30 transported forward by the rotating roller 52 at the center across the outer surface thereof.

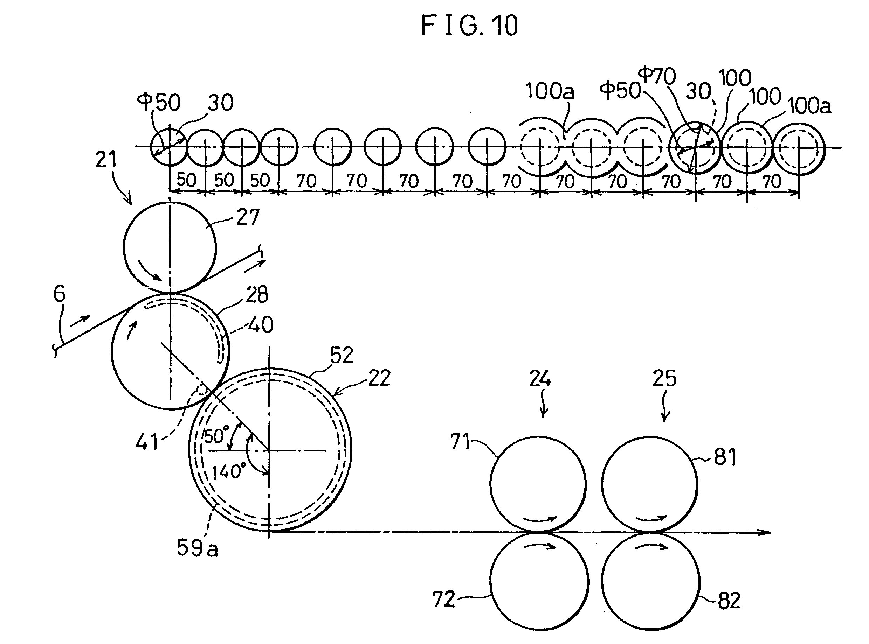

A negative pressure supply path 59 to the suction sections 58 is provided inside the fixing roller 51 and rotating roller 52. The negative pressure supply path 59 is connected to an unillustrated air vacuuming unit at one end and extends to the suction sections 58 at the other end. The extended end portions serve as negative pressure supply holes 59a. As shown in Figure 10, the negative pressure supply holes 59a are made around the rotating roller 52. Thus, there develops an attracting force all over the outer surface of the rotating roller 52, namely, the delivery drum unit 22.

The outer surface of the rotating roller 52 is smaller than the 50mm-dia oxygen absorbing sheet tip 30 in width, and the peripheral speed of the rotating roller 52 is faster than that of the anvil roller 28. Therefore, as shown in Figure 1, the oxygen absorbing sheet tips 30 are delivered from the anvil roller 28 to the delivery drum unit 22 at regular intervals.

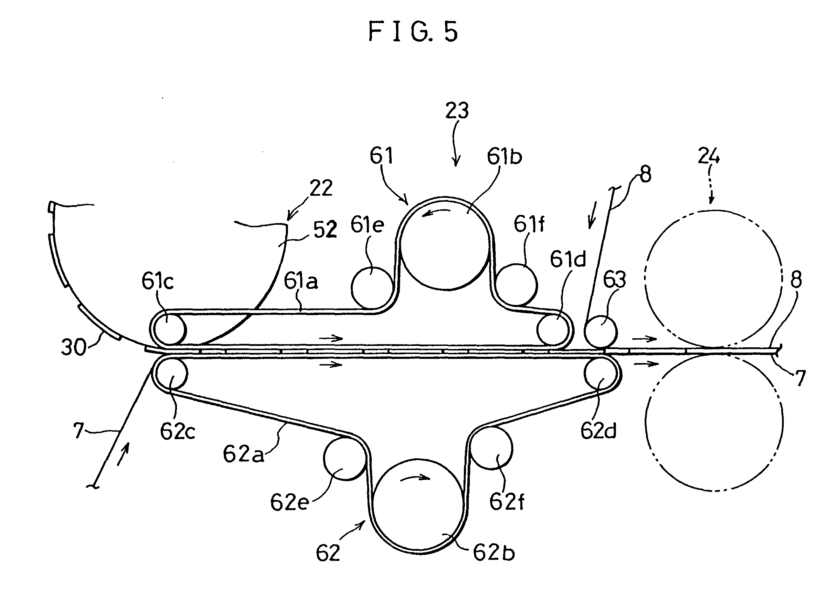

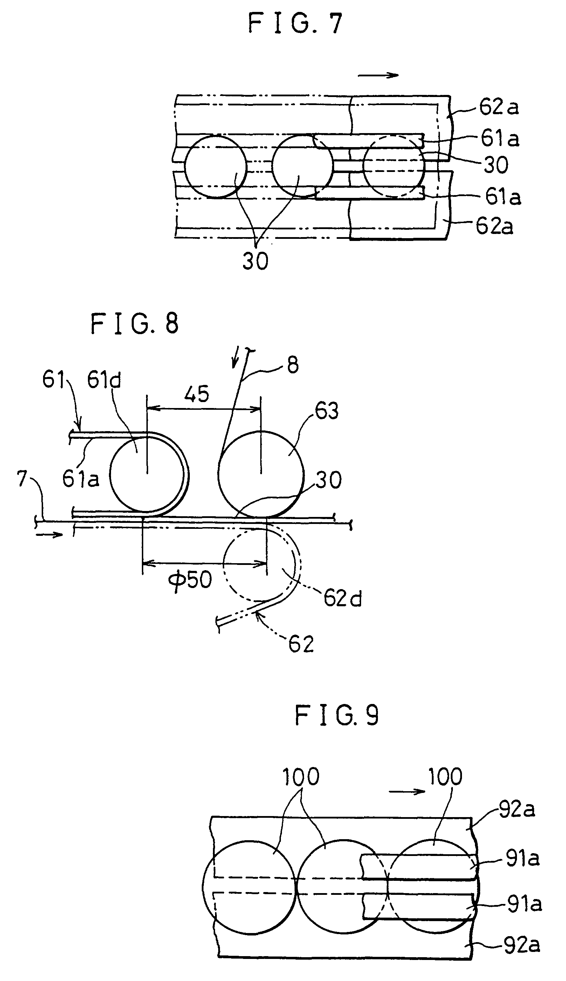

As shown in Figure 5, the first transportation belt unit 23 includes a round belt unit 61 (an upper transportation belt unit or upper transportation unit) and a flat belt unit 62 (a lower transportation belt unit or lower transportation unit). As shown in Figure 7, the round belt unit 61 moves two round belts 61a aligned in parallel. The two round belts 61a are respectively located along the two opposing sides of the rotating roller 52 where the transportation begins. In other words, the interval between the two round belts 61a is longer than the width of the rotating roller 52 but smaller than the diameter of the oxygen absorbing sheet tip 30. The round belt unit 61 drives the two round belts 61a to rotate using a driving roller 61b, a start edge support roller 61c provided at an edge where the transportation starts, an end edge support roller 61d provided at an edge where the transportation ends, and two guide rollers 61e and 61f.

Likewise, as shown in Figure 7, the flat belt unit 62 moves two flat belts 62a aligned in parallel. The flat belt unit 62 drives the two flat belts 62a to rotate using a driving roller 62b, a start edge support roller 62c, an end edge support roller 62d, and two guide rollers 62e and 62f. The start edge support roller 62c of the flat belt unit 62 is placed directly below the start edge support roller 61c of the round belt unit 61 in a direction in which the oxygen absorbing sheet tips 30 are transported. On the other hand, the end edge support roller 62d of the flat belt unit 62 is placed ahead of the end edge support roller 61d of the round belt unit 61 in the same direction.

A guide roller 63 is provided beyond the end edge support roller 61d in the transportation direction in such a manner to oppose the end edge support roller 61d of the round belt unit 61. The guide roller 63 guides the strip cover film 8 supplied from the cover film supply shaft 4 onto the oxygen absorbing sheet tips 30 placed on the breathing layer strip sheet 7. Further, the guide roller 63, together with the end edge support roller 61d of the round belt unit 61, transports the oxygen absorbing sheet tips 30 while maintaining their positions on the breathing layer strip sheet 7. In other words, the distance between the end edge support roller 61d and guide roller 63 is not longer than the diameter of the oxygen absorbing sheet tip 30. To be more specific, as shown in Figure 8, the distance between the end edge support roller 61d and guide roller 63 is set to 45mm in relation to the 50-mm-dia oxygen absorbing sheet tips 30 in the present embodiment. Therefore, the oxygen absorbing sheet tip 30 being delivered from the end edge support roller 61d, or the round belt 61a, to the guide roller 63 is always pressed against the breathing layer strip sheet 7 by at least the round belt 61a or guide roller 63.

As shown in Figure 1, the rotary seal unit 24 includes a heat roller 71 and a receiving roller 72. The rotary seal unit 24 sandwiches the breathing layer strip sheet 7 and strip cover film 8 using both the rollers 71 and 72. That is to say, the rotary seal unit 24 seals the breathing layer strip sheet 7 and strip cover film 8 with the oxygen absorbing sheet tips 30 in between by heat and pressure. As shown in Figure 10, sealed portions 100a of the breathing layer strip sheet 7 and strip cover film 8 between every two adjacent oxygen absorbing sheet tips 30 are connected sequentially in the transportation direction with no space in between.

The second rotary die cut unit 25 includes a cut roller 81 and an anvil roller 82, which are slightly spaced apart and oppose each other vertically. The second rotary die cut unit 25 cuts out the oxygen absorbing sheet tips 30 covered with the breathing layer strip sheet 7 and strip cover film 8, namely, sheet wrapping bodies 100 shown in Figure 1, from a strip of sealed sheet supplied through a space between the rollers 81 and 82 as they rotate.

In the present embodiment, the second rotary die cut unit 25 cuts out the 70-mm-dia sheet wrapping bodies 100 from the sealed sheet continuously in a direction in which the second rotary die cut unit 25 rotates without leaving any unwanted space between every two adjacent sheet wrapping bodies 100.

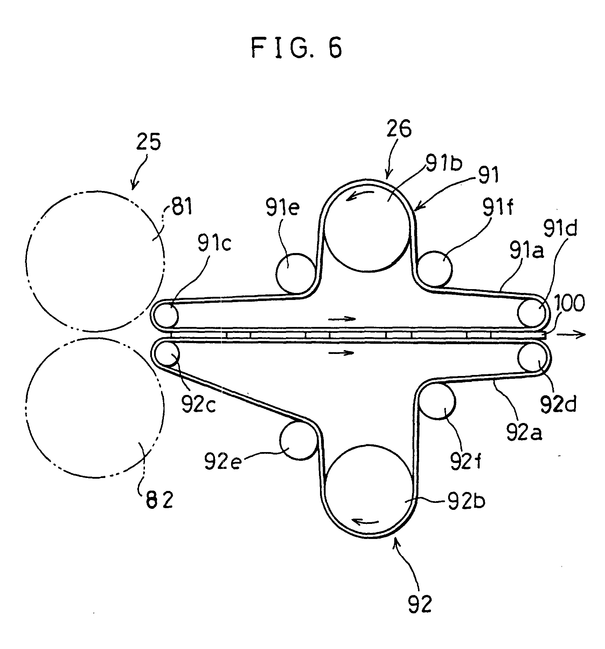

As shown in Figure 6, the second transportation belt unit 26 includes an upper round belt unit 91 and a lower flat belt unit 92. As shown in Figure 9, the former moves two round belts 91a aligned in parallel. The interval between the two round belts 91a is shorter than the diameter of the sheet wrapping body 100. The round belt unit 91 drives the two round belts 91a to rotate using a driving roller 91b, a start edge support roller 91c provided at an edge where the transportation starts, an end edge support roller 91d provided at an edge where the transportation ends, and two guide rollers 91e and 91f.

Likewise, as shown in Figure 9, the flat belt unit 92 moves two flat belts 92a aligned in parallel. The flat belt unit 92 drives the two flat belts 92 to rotate using a driving roller 92b, a start edge support roller 92c, an end edge support roller 92d, and two guide rollers 92e and 92f.

According to the structure with the above-explained units, the oxygen absorbing strip sheet 6 wound up around the oxygen absorbing sheet supply shaft 1 reaches the used oxygen absorbing sheet take-up shaft 2 after passing through the nip roller 9 and first rotary die cut unit 21 by way of the guide rollers 10 and 11. On the other hand, the breathing layer strip sheet 7 wound up around the breathing layer sheet supply shaft 3 reaches the used coating sheet take-up shaft 5 after passing through the first transportation belt unit 23, rotary seal unit 24, and second rotary die cut unit 25 by way of the guide roller 14. Also, the strip cover film 8 wound up around the cover film supply shaft 4 reaches the used coating sheet take-up shaft 5 after passing through the guide rollers 13 and 63, rotary seal unit 24, and second rotary die cut unit 25 by way of the guide roller 14.

To be more specific, according to the above structure, the oxygen absorbing strip sheet 6 supplied from the oxygen absorbing sheet supply shaft 1 is transported to a space between the cut roller 27 and anvil roller 28 of the first rotary die cut unit 21. Then, the first rotary die cut unit 21 cuts out the oxygen absorbing sheet tips 30 in succession from the oxygen absorbing strip sheet 6 by rotating the cut roller 27 and anvil roller 28. The oxygen absorbing sheet tips 30 thus made are attracted to the anvil roller 28 and transported forward as the anvil roller 28 rotates. On the other hand, the oxygen absorbing strip sheet 6 having passed through the first rotary die cut unit 21 is reeled up around the used oxygen absorbing take-up shaft 2 as the used oxygen absorbing sheet. The oxygen absorbing sheet tips 30 are cut out successively in such a manner that every two adjacent tips 30 are hardly spaced apart. Thus, every two adjacent oxygen absorbing sheet tips 30 touch, or almost touch each other while being transported by adhering to the anvil roller 28.

The oxygen absorbing sheet tips 30 are delivered to the delivery drum unit 22 from the anvil roller 28 when they are transported to a point where the anvil roller 28 opposes the delivery drum unit 22. At this point, as shown in Figure 3, the suction sections 39 of the anvil roller 28 attracting the oxygen absorbing sheet tips 30 come outside the negative pressure area setting groove 40. Thus, such suction sections 39 no longer develop the attracting force with respect to the oxygen absorbing sheet tips 30. In addition, to prevent the oxygen absorbing sheet tips 30 from being attracted by residual negative pressure in the suction sections 39, compressed air is forcibly blown into the suction sections 39 from the positive pressure supply hole 41 when the suction sections 39 reach the positive pressure supply hole 41. As a result, the oxygen absorbing sheet tips 30 are delivered from the anvil roller 28 to the delivery drum unit 22 in a secured manner.

The peripheral speed of the delivery drum unit 22 is faster than that of the anvil roller 28. Thus, the oxygen absorbing sheet tips 30 are delivered from the anvil roller 28 to the delivery drum unit 22 in such a manner to align on the outer surface of the delivery drum unit 22 at regular intervals. The interval between two adjacent oxygen absorbing sheet tips 30 is as long as the width of the sealed portion 100a between two adjacent oxygen absorbing sheet tips 30 made by the rotary seal unit 24 shown in Figure 10.

The oxygen absorbing sheet tips 30 transported to the first transportation belt unit 23 by the delivery drum unit 22 are forcibly removed from the delivery drum unit 22 by the two round belts 61a of the round belt unit 61 placed above the oxygen absorbing sheet tips 30. Then, the oxygen absorbing sheet tips 30 are placed on the breathing layer strip sheet 7 supplied on the two flat belts 62a of the flat belt unit 62. Subsequently, the oxygen absorbing sheet tips 30 are transported further while being fastened by the two round belts 61a and two flat belts 62a.

Then, the oxygen absorbing sheet tips 30 are transported to the end edge support roller 61d of the round belt unit 61 and delivered further to the guide roller 63 while being fastened by both the guide roller 63 and the end edge support roller 61d, namely, the two round belts 61a. Thus, the oxygen absorbing sheet tips 30 are delivered while maintaining their positions.

Next, the upper surfaces of the oxygen absorbing sheet tips 30 having reached the guide roller 63 are covered with the strip cover film 8 supplied from above. Therefore, from this point, the oxygen absorbing sheet tips 30 are sandwiched by the lower breathing layer strip sheet 7 and upper strip cover film 8, and transported further while maintaining their positions with respect to the breathing layer strip sheet 7 and strip cover film 8.

The lamination of the strip cover film 8, oxygen absorbing sheet tips 30, and breathing layer strip sheet 7 reaches the rotary seal unit 24, and the circumference of each oxygen absorbing sheet tip 30 is sealed by the rotary seal unit 24. Then, the sealed sheet is transported further to the second rotary die cut unit 25 and cut out in the sealed portion 100a around each oxygen absorbing sheet tip 30, thereby producing the sheet wrapping bodies 100. The second rotary die cut unit 25 cuts the sealed sheet in such a manner to leave no space between every two adjacent sheet wrapping bodies 100.

Subsequently, the used breathing layer strip sheet 7 and strip cover film 8 are reeled up around the used coating sheet take-up shaft 5 by way of the guide roller 14. On the other hand, the sheet wrapping bodies 100 are transported further while being fastened from above and underneath by the transportation belt unit 26 to maintain their positions, and carried into an unillustrated container section or the like.

As has been explained, the sheet wrapping body producing apparatus of the present embodiment has a single linear transportation path as the producing line that starts with the production of the oxygen absorbing sheet tips 30 and ends with the production of the sheet wrapping bodies 100. Therefore, the sheet wrapping body producing apparatus can omit some spaces compared with a counterpart that transports the oxygen absorbing sheet tips 30 in one transportation path and produces the sheet wrapping bodies 100 in another transportation path having a different transportation direction. As a result, it has become possible to downsize the sheet wrapping body producing apparatus.

Accordingly, the sheet wrapping body producing apparatus of the present embodiment obviates a complicated control using a number of sensors or the like, and thus comprises fewer components and can be controlled by a simpler manner, thereby realizing a low running-cost apparatus.

In the sheet wrapping body producing apparatus of the present embodiment, the oxygen absorbing sheet tips 30 are cut out from the oxygen absorbing strip sheet 6 by the first rotary die cut unit 21, the breathing layer strip sheet 7 and strip cover film 8 are sealed with the oxygen absorbing sheet tips 30 in between by the rotary seal unit 24, and the sheet wrapping bodies 100 are cut out from the sealed sheet by the second rotary die cut unit 25. Since each of the above three units comprises a pair of rotating rollers, the above actions can be carried out in succession at high speeds.

Also, to ensure such a successive and fast operation, the oxygen absorbing sheet tips 30 are transported while maintaining their positions. Consequently, the sheet wrapping bodies can be produced at high speeds.

The oxygen absorbing sheet tips 30 made by the first rotary die cut unit 21 are attracted to the anvil roller 28 and delivered to the delivery drum unit 22, which attracts and delivers the same to the first transportation belt unit 23. Thus, once the oxygen absorbing sheet tips 30 are made, the same are transported sequentially at high speeds without causing any misalignment until they are supplied onto the breathing layer strip sheet 7.

Also, a space between the adjacent oxygen absorbing sheet tips 30 can be readily determined by adjusting the difference in peripheral speed between the anvil roller 28 and delivery drum unit 22.

When the oxygen absorbing sheet tips 30 are delivered from the delivery drum unit 22 to the first transportation belt unit 23, the oxygen absorbing sheet tips 30 are removed from the delivery drum unit 22 by the round belt unit 61 of the first transportation belt unit 23 and placed on the flat belt unit 62. Then, the oxygen absorbing sheet tips 30 are transported further while being fastened by the flat belt unit 62 and round belt unit 61. Thus, the oxygen absorbing sheet tips 30 are delivered from the delivery drum unit 22 to the first transportation belt unit 23 in a satisfactory manner without causing any misalignment.

When the strip cover film 8 is supplied onto the oxygen absorbing sheet tips 30, the oxygen absorbing sheet tips 30 are released from the fastening of the round belt unit 61 and flat belt unit 62, but instead, fastened by the guide roller 63 and flat belt unit 62. To be more specific, when the oxygen absorbing sheet tips 30 are delivered from the round belt unit 61 to the guide roller 63, the top end of each oxygen absorbing sheet tip 30 is fastened by the guide roller 63 and flat belt unit 62 before the bottom end thereof passes by the round belt unit 61. Thus, the oxygen absorbing sheet tips 30 are always fastened at the top or bottom end at the time of delivery, thereby causing no misalignment.

Also, the first rotary die cut unit 21 and second rotary die cut unit 25 respectively cut out the oxygen absorbing strip sheet 6 and the sealed sheet in their respective rotational directions in such a manner not to leave any unwanted space between every two adjacent oxygen absorbing sheet tips 30 and between every two adjacent sheet wrapping bodies 100, respectively. In addition, a space as large as the sealed portion 100a produced by the rotary seal unit 24 is secured between the adjacent oxygen absorbing sheet tips 30 by setting the peripheral speeds of the rotating the anvil roller 28 and delivery drum unit 22 adequately. Thus, the sheet wrapping bodies 100 can be produced at high speeds while reducing the wasted material as much as possible.

The sheet wrapping bodies 100 produced by the sheet wrapping body producing apparatus of the present embodiment wrap the oxygen absorbing sheets. However, the structure of the sheet wrapping bodies 100 is not limited to the above. The sheet wrapping bodies 100 may wrap other types of sheets instead of the oxygen absorbing sheets, for example, medicated sheets releasing the medicated components.

The first transportation belt unit 23 uses the round belt unit 61 in the present embodiment. However, the round belt unit 61 may be replaced with a flat belt unit similar to the flat belt unit 62. In this case, the width of the flat belts limits the transportation, but the frictional force with respect to the oxygen absorbing sheet tips 30 increases, thereby making it possible to transport the oxygen absorbing sheet tips 30 in a more satisfactory manner after all.

In the sheet wrapping body producing apparatus in accordance with the present embodiment, it is a heat-seal action of the rotary seal unit 24 that determines the operation speed. Thus, it is preferable to pre-heat the strip cover film 8 alone or both the strip cover film 8 and breathing layer strip sheet 7 to speed up the operation.

Alternatively, the breathing layer strip sheet 7 may be bonded to the strip cover film 8 with an adhesive agent. In this case, the adhesive agent is spread all over the breathing layer strip sheet 7 on the surface opposing the strip cover film 8, and the breathing layer strip sheet 7 is supplied as a paper covering the adhesive surface which is peeled off. Here, the rotary seal unit 24 applies only a pressure against the sheets subject to sealing.

### (Second Embodiment)

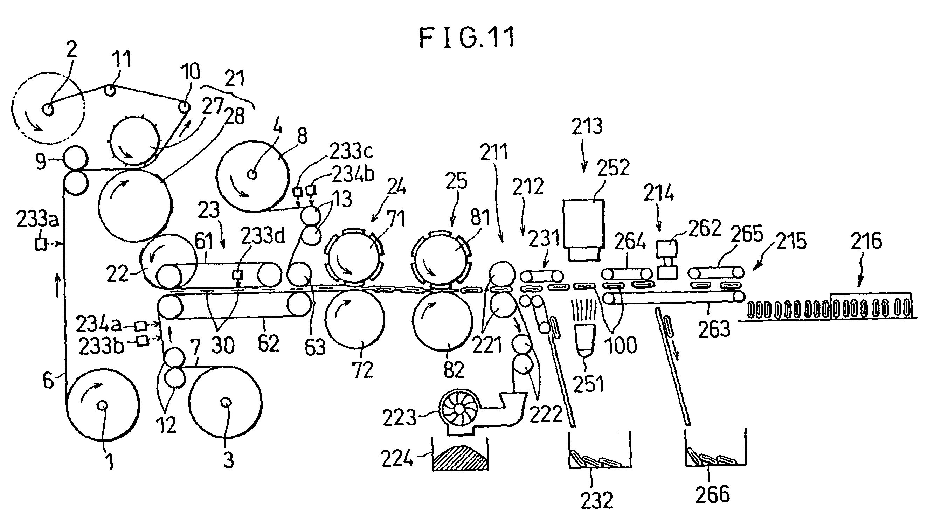

Referring to Figures 11 through 19, the following description will describe another example embodiment of the present invention. Hereinafter, like components are labeled with like reference numerals with respect to the first embodiment, and the description of these components is not repeated for the explanation's convenience.

Figure 11 shows a schematic structure of a sheet wrapping body producing apparatus in accordance with the present embodiment. The sheet wrapping body producing apparatus includes the same structure as the counterpart of the first embodiment in the first half stage except that the used coating sheet take-up shaft 5 is replaced with a used coating sheet cut and collect unit 211.

The used coating sheet cut and collect unit 211 includes a pair of guide rollers 221, another pair of guide rollers 222, a cut blower 223, and a collecting box 224. In the used coating sheet cut and collect unit 211, the used breathing layer strip sheet 7 and strip cover film 8 are transported into the cut blower 223 by way of the pair of guide rollers 222, cut into pieces, and collected in the collecting box 224.

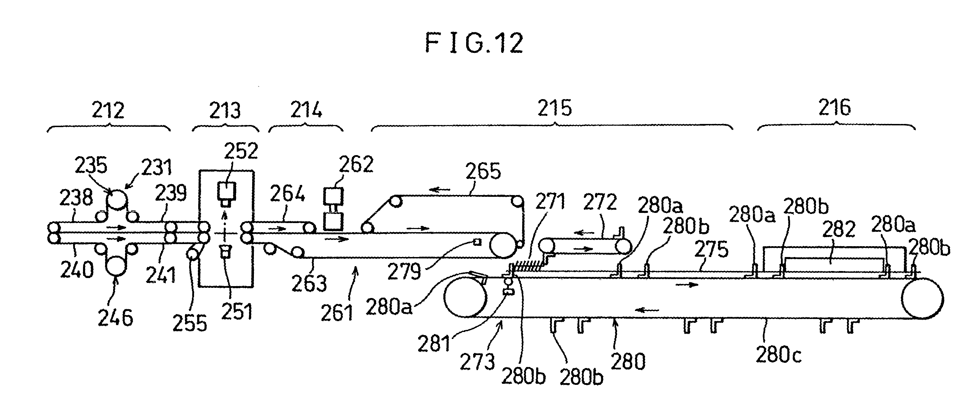

The structure beyond the guide rollers 221 in Figure 11 is the second half stage of the sheet wrapping body producing apparatus herein. The second half stage includes the following components sequentially in a direction in which the sheet wrapping bodies 100 are transported: a first defective body collecting section 212, a translucent defective body detecting section 213 (second defect detecting means), a second defective body collecting section 214, an aligning and transporting section 215 (aligning and transporting means), and a boxing section 216. Figure 12 depicts the structure of the second half stage.

The first defective body collecting section 212 includes a second transportation belt unit 231, a collecting box 232, color sensors 233a-233d (first defect detecting means), and photoelectric sensors 234a and 234b (first defect detecting means). Note that the color sensors 233a-233d and photoelectric sensors 234a and 234b are provided in the first half stage to detect a defect in advance.

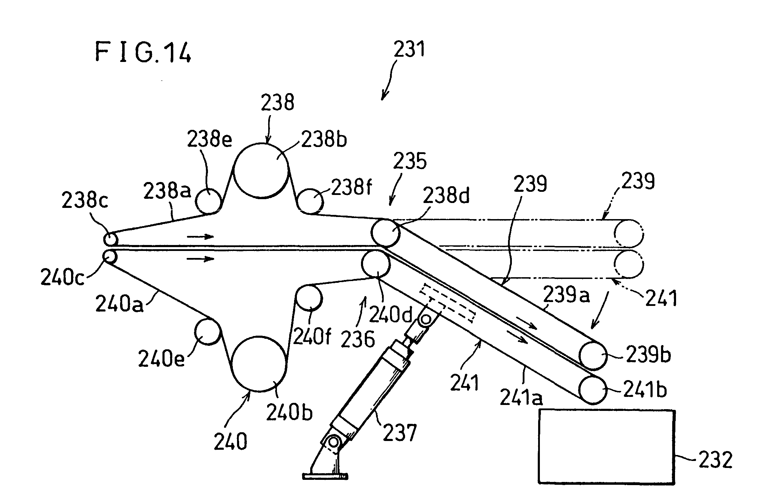

As shown in Figure 14, the second transportation belt unit 231 includes an upper belt unit 235, a lower belt unit 236, and a cylinder 237. The upper belt unit 235 and lower belt unit 236 fasten the sheet wrapping bodies 100 and transport the same.

The upper belt unit 235 includes a forward belt unit 238 and an aft belt unit 239. The former comprises a belt 238a, a driving roller 238b, two supporting rollers 238c and 238d, and two guide rollers 238e and 238f. The latter comprises a belt 239a, a supporting roller 239b, and the supporting roller 238d. The belt 238a is driven by the driving roller 238b and moves in the direction indicated by an arrow in the drawing. The belt 239a moves together with the supporting roller 238d which rotates as the belt 238a moves.

Likewise, the lower belt unit 236 includes a forward belt unit 240 and an aft belt unit 241. The former comprises a belt 240a, a driving roller 240b, two supporting rollers 240c and 240d, and two guide rollers 240e and 240f. The latter comprises a belt 241a, a supporting roller 241b, and the supporting roller 240d. The belt 240a is driven by the driving roller 240b and moves in the direction indicated by an arrow in the drawing. The belt 241a moves together with the supporting roller 240d which rotates as the belt 240a moves.

Both the aft belt units 239 and 241, as a single unit, turn respectively around the supporting rollers 238d and 240d from a transporting position indicated by a chain double-dashed line to a collecting position indicated by a solid line and vice versa. The aft belt units 239 and 241 are set in the transporting position when the sheet wrapping bodies 100 are transported further in the second half stage, and set in the collecting position when a defective sheet wrapping body 100 is thrown into the collecting box 232. The aft belt units 239 and 241 are turned by the cylinder 237. This means that the aft belt units 239 and 241 and the cylinder 237 form first removing means.

The color sensors 233a, 233b, and 233c detect seams of the oxygen absorbing strip sheet 6, breathing layer strip sheet 7, and strip cover film 8, respectively.

The seams referred herein are, in case of the oxygen absorbing strip sheet 6, the joints between the bottom end portion of an oxygen absorbing strip sheet 6 and the top end portion of a following one. As has been explained, the sheet wrapping body producing apparatus of the present embodiment produces a sheet wrapping body at high speeds by supplying the oxygen absorbing strip sheet 6, breathing layer strip sheet 7, and strip cover film 8 continuously. Therefore, when a roll of the oxygen absorbing strip sheet 6 is used up, the bottom end portion thereof is jointed with the top end of another roll of the oxygen absorbing strip sheet 6 to resume the supply of the oxygen absorbing strip sheet 6 swiftly, ensuring high productivity. This is how the oxygen absorbing strip sheet 6 includes the seam and such a oxygen absorbing strip sheet 6 is supplied to the sheet wrapping body producing apparatus. The same can be said with the breathing layer strip sheet 7 and strip cover film 8.

Sheet wrapping bodies 100 including the seam must be removed as defective ones, and the color sensors 233a-233c detect the seams based on the changes in color.

The photoelectric sensors 234a and 234b detect the snaking of the breathing layer strip sheet 7 and strip cover film 8, respectively. In case of the photoelectric sensor 234a, a pair of sensors are provided at the two opposing end sides of the breathing layer strip sheet 7, and the snaking of the breathing layer strip sheet 7 is detected based on variance in amount of reflected light. The same applies to the relationship between the photoelectric sensor 234b and strip cover film 8.

If the breathing layer strip sheet 7 or strip cover film 8 snakes during the transportation, the oxygen absorbing sheet tips 30 are not covered with the coating materials in a satisfactory manner, or the oxygen absorbing sheet tips 30 are put to one side within the sheet wrapping bodies 100. Such sheet wrapping bodies 100 reduce the commercial value and must be removed. This is the reason why the photoelectric sensors 234a and 234b detect the snaking of the breathing layer strip sheet 7 and strip cover film 8, respectively.

The color sensor 233d detects the right and back sides of the oxygen absorbing sheet tips 30 and the pitches therebetween. The oxygen absorbing sheet 6, namely, the oxygen absorbing sheet tips 30, must oppose the breathing layer strip sheet 7 at the oxygen absorbing surface; otherwise, the oxygen absorbing sheet tips 30 do not absorb oxygens as good as they should. Also, the right and back sides of the oxygen absorbing sheet tips 30 have different colors and luster. This is the reason why the right and back sides of the oxygen absorbing sheet tips 30 are detected by the color sensor 233d. Note that the color sensor 233d has to carry out the detection only once for a roll of the oxygen absorbing strip sheet 6.

Also, if a pitch between two adjacent oxygen absorbing sheet tips 30 varies from a predetermined pitch, some sheet wrapping bodies 100 may cause defects at the sealing steps at the rotary seal unit 24 and at the cutting out step at the rotary die cut unit 25. Therefore, the color sensor 233d detects the pitches between the oxygen absorbing sheet tips 30 to remove the defective sheet wrapping bodies 100.

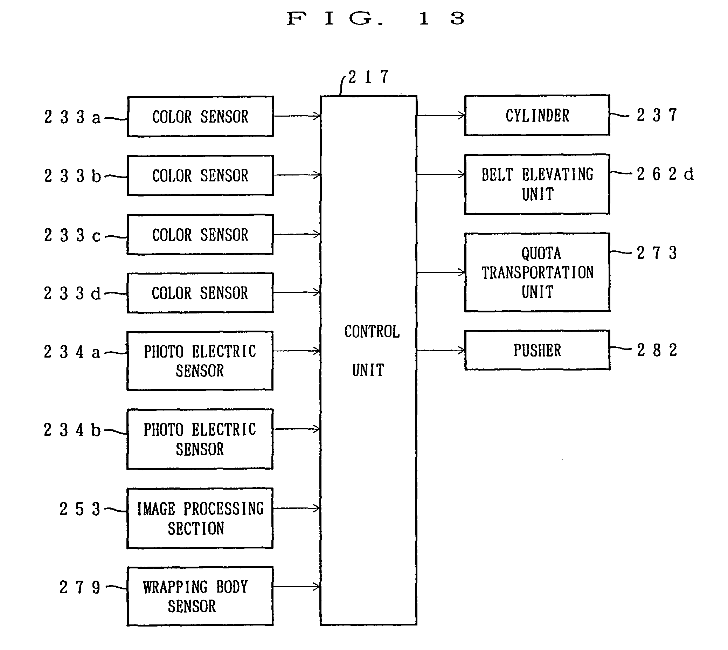

When any of the color sensors 233a-233d and photoelectric sensors 234a and 234b detects a defect, such a defective sheet wrapping body 100 is removed by the first defective body collecting section 212. To enable the above removal, the sheet wrapping body producing apparatus of the present embodiment additionally includes a control unit 217 shown in Figure 13. The control unit 217 comprises, for example, a microcomputer and judges a defect based on detection signals from the color sensors 233a-233d and photoelectric sensors 234a and 234b. In addition, the control unit 217 controls the cylinder 237, so that the aft belt units 239 and 241 of the second transportation belt unit 231 are turned to the collecting position in response to the notice of defect from any of the above sensors. Accordingly, defective sheet wrapping bodies 100 are thrown into the collecting box 232.

In practice, the control unit 217 computes a driving timing of the cylinder 237 based on the position of each sensor and the transportation speed of the sheet wrapping bodies 100 or the like. If a defective sheet wrapping body 100 can not be specified at the first defective body collecting section 212, some of the sheet wrapping bodies 100 before and after the one in question may be also removed.

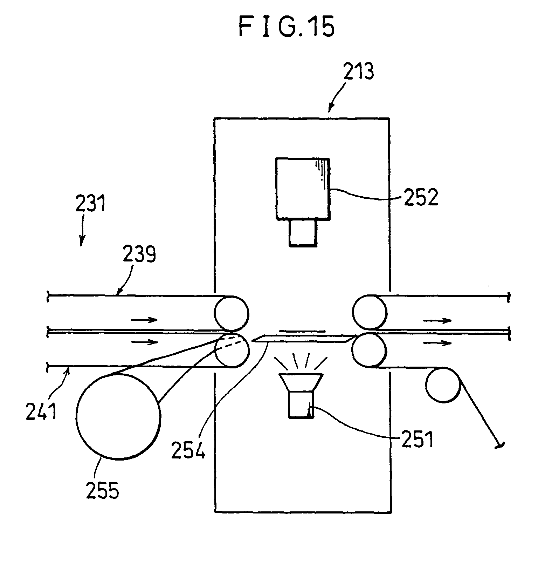

The translucent defective body detecting section 213 includes a light source 251, a camera section 252, a glass plate 254, a transportation blower 255, and an image processing section 253. The last referred component is shown in Figure 13 and the rest is shown in Figure 15. The glass plate 254 is provided in a transportation path of the sheet wrapping bodies 100 between the first defective body collecting section 212 and second defective body collecting section 214. The light source 251 is provided under the glass plate 254 to irradiate light to the sheet wrapping body 100 on the glass plate 254. The camera section 252 is placed to oppose the light source 251 with the glass plate 254 in between. The camera section 252 picks up an image of the sheet wrapping body 100 and converts the image into image data. The image processing section 253 processes the image data from the camera section 252 and judges whether the sheet wrapping body 100 is defective or not. The transportation blower 255 produces an air layer on the glass plate 254, so that the sheet wrapping body 100 is transported without touching the glass plate 254.

In the translucent defective body detecting section 213, whether the sheet wrapping body 100 contains the oxygen absorbing sheet tip 30 or not is detected first. Then, whether the outer dimensions of the sheet wrapping body 100 is within the specification or not is detected.

Although the image processing section 253 may judge a defect using a known algorithm for graphic analysis, an amount of data can be reduced by another method using the feature extraction of the original image to speed up the judgment. That is to say, by extracting only the features, such as edges of the original image, the original image on a plane (two dimensions) can be treated as lines (one dimension), thereby making it possible to reduce a volume of image data.

The sheet wrapping body 100 is irradiated by the high-intensity light source 251 in such a manner that the back ground gives no adverse effects. Thus, the contour of the sheet wrapping body 100 and the contents thereof, namely, the shadow of the oxygen absorbing sheet tip 30, is picked up.

Subjects of detection by the translucent defective body detecting section 213, color sensors 233a-233d, and photoelectric sensors 234a and 234b are set forth in TABLE 1 below.

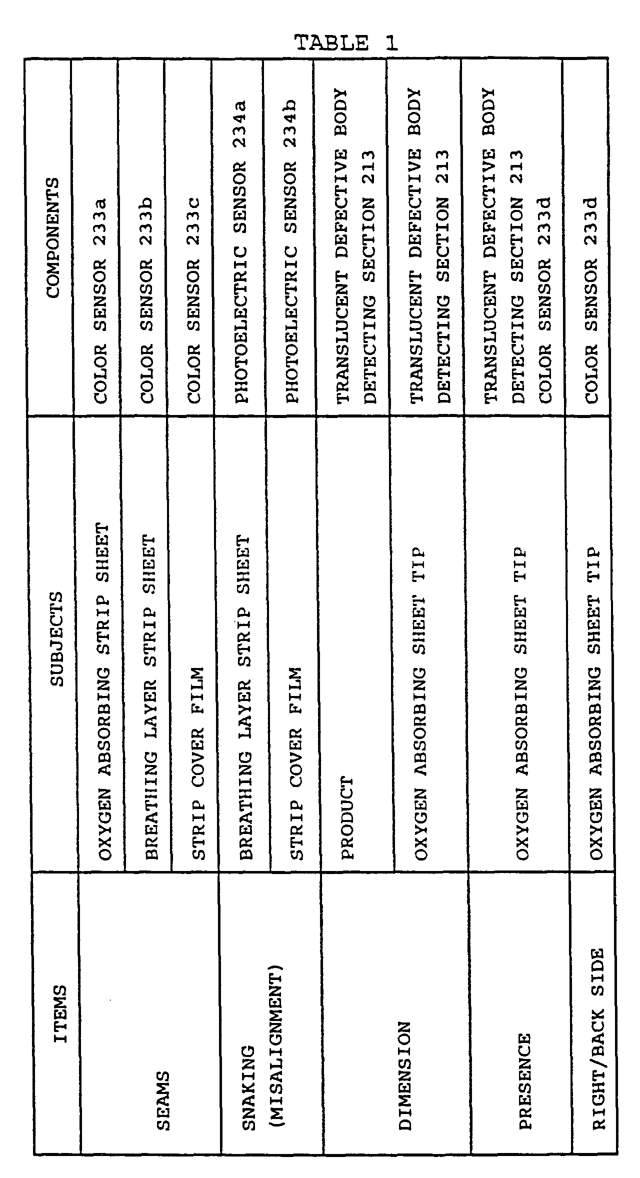

As shown in Figure 12, the second defective body collecting section 214 comprises the first half portion of a third transportation belt 261 and a defective body removing unit 262 (second removing means). The third transport belt unit 261 includes a lower transport belt unit 263, an upper-forward transportation belt unit 264, and an upper-aft transportation belt unit 265. In the first half portion of the transportation belt unit 261, the sheet wrapping bodies 100 are transported while being fastened by the first half portion of the lower transportation belt unit 263 and upper-forward transportation belt unit 264. Whereas in the second half portion of the transportation belt unit 261, the sheet wrapping bodies 100 are transported while being fastened by the second half portion of the lower transportation belt unit 263 and the upper-aft transportation belt unit 265. Like the aforementioned transportation belt units, all the transportation belt units 263-265 move their respective belts that are supported by rollers.

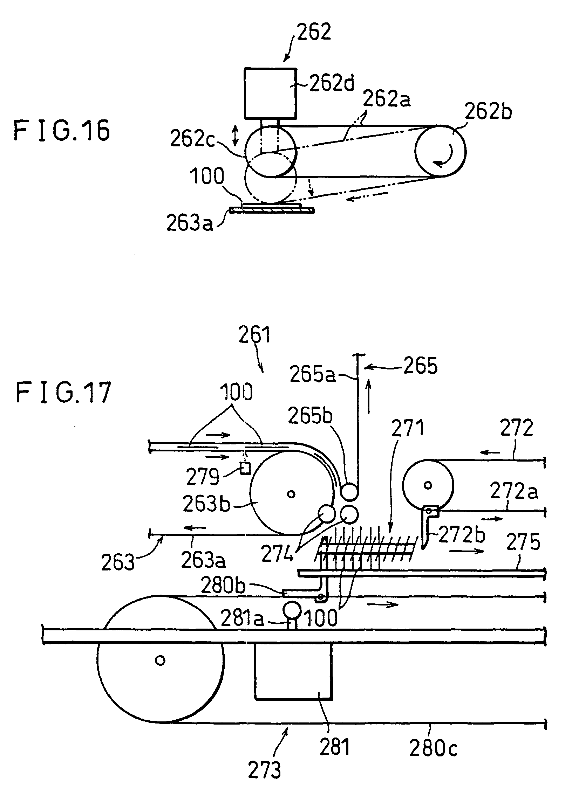

The defective body removing unit 262 is provided between the upper-forward transportation belt unit 264 and upper-aft transportation belt unit 265 on the lower transportation belt 263. As shown in Figure 16, the defective body removing unit 262 includes a belt 262a, supporting rollers 262b and 262c, and a belt elevating unit 262d.

The belt 262a is provided in such a manner to intersect at right angles with the direction in which the sheet wrapping bodies 100 are transported by the lower transportation belt unit 263. The supporting roller 262b is stationary, while the other supporting roller 262c is driven by the belt elevating unit 262d and moves between an waiting position indicated by a solid line and an operating position indicated by a chain double-dotted line where the belt 262a touches the sheet wrapping body 100. When the supporting roller 262c moves to the operating position while the belt 262a is rotating, the sheet wrapping body 100 on the belt 263a is spun off the belt 263a by the belt 262a in the direction indicated by an arrow. The sheet wrapping body 100 thus removed is thrown into a collecting box 266 shown in Figure 11. Note that it does not matter either of the supporting roller 262b or 262c serves as the driving force.

The operation of the belt elevating unit 262d is controlled by the control unit 217 shown in Figure 13. To be more specific, when the image processing section 253 of the translucent defective body detecting section 213 judges a sheet wrapping body 100 is defective, the control unit 217 controls the belt elevating unit 262d to remove the defective sheet wrapping body 100. The control unit 217 computes a control timing based on a distance between the translucent defective body detecting section 213 and defective body removing unit 262, and the transportation speed of the sheet wrapping bodies 100.

The second transportation belt unit 231 may also include the defective body removing unit 262 instead of the mechanism comprising the aft belt units 239 and 241 and the cylinder 237.

The aligning and transporting section 215 includes the second half portion of the third transportation belt unit 261, namely, the upper-aft transportation belt unit 265 and the second half portion of the lower transportation belt 263, an alignment screw unit 271, a wrapping body's top supporting unit 272, and a quota transportation unit 273.

As shown in Figure 17, the supporting roller 265b in the second half portion of the upper-aft transportation belt unit 265 is placed near the back of the supporting roller 263b of the lower transportation belt unit 263. The axes of the supporting rollers 265b and 263b are substantially in the same level. The belt 265a of the upper-aft transportation belt unit 265 overlaps the belt 263a of the lower transportation unit 263 in a part of the outer surface of the supporting roller 263b. Thus, the sheet wrapping body 100 fastened by the belts 265a and 263a is transported downward at the bottom end portions of the upper-aft transportation belt unit 265 and lower transportation belt unit 263.

A pair of guide rollers 274 are provided under the supporting roller 265b for guiding the sheet wrapping body 100 further downward. The pair of guide rollers 274, lower transportation belt unit 263, and upper-aft transportation belt unit 265 form carrying means. The alignment screw unit 271 is provided below the pair of guide rollers 274. Therefore, the sheet wrapping body 100 is transported downward through a space between the pair of guide rollers 274 to the alignment screw unit 271 in upright position.

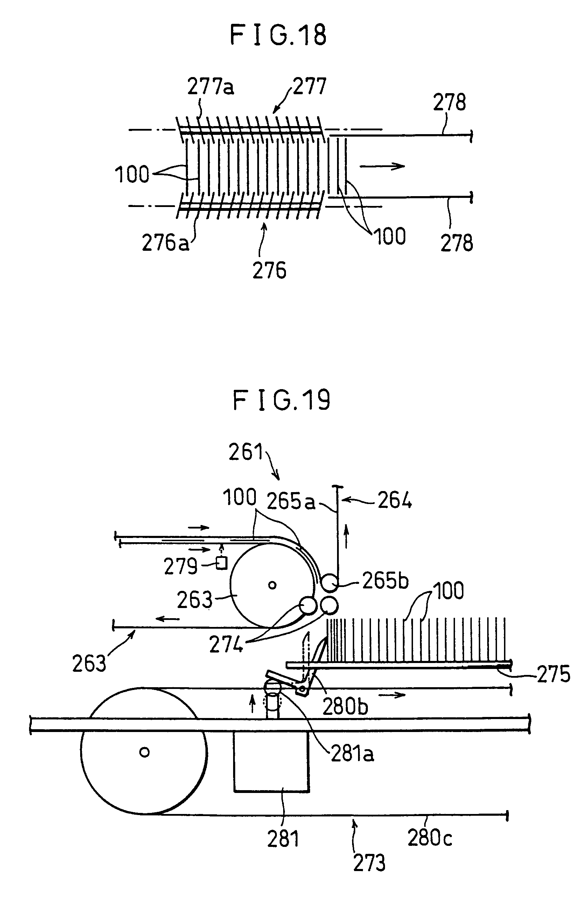

The alignment screw unit 271 is placed on a lower guide plate 275. As shown in Figure 18, the alignment screw unit 271 includes a pair of alignment screws 276 and 277 which respectively include a series of spiral blades portions 276a and 277a. Each screw is driven to rotate by an unillustrated driving mechanism. The sheet wrapping body 100 thrown into the alignment screw unit 271 is held between the alignment screws 276 and 277, and moves on the lower guide plate 275 in the direction indicated by an arrow as the alignment screws 276 and 277 rotate. More precisely, the two opposing sides of the sheet wrapping body 100 are held by the blades of the blade portions 276a and 277a placed before and after the sheet wrapping body 100 in the axial direction of the blades, respectively. After the sheet wrapping body 100 passed by the end portions of the alignment screws 276 and 277, the two opposing sides are respectively guided by side portion guides 278 shown in Figure 18.

The sheet wrapping bodies 100 are sequentially transported on the lower guide plate 275 while the one at the head of those on the lower guide plate 275 is supported by the body's top end supporting unit 272 at the top end. As shown in Figure 17, the body's top end supporting unit 272 includes, for example, a belt 272a moving in a direction in which the sheet wrapping bodies 100 are transported and a supporting member 272b attached to the belt 272a. The supporting member 272b can touch the top end of the sheet wrapping body 100 held upright on the lower guide plate 275. Also, the supporting member 272b moves in the transportation direction as the sheet wrapping bodies 100 are transported forward by the alignment screw unit 271. Accordingly, it has become possible to prevent the sheet wrapping bodies 100 from falling forward.

As shown in Figure 12, the quota transportation unit 273 includes a wrapping body sensor 279, a transportation unit 280, and a partition member driving unit 281. The transportation unit 280 and partition member driving unit 281 form partition means. As shown in Figure 19, the wrapping body sensor 279 detects each sheet wrapping body 100 passing over the lower transportation belt unit 263 to enable the control unit 217 to count the sheet wrapping bodies 100 transported to the alignment screw unit 271. Therefore, the wrapping body sensor 279 and control unit 217 form counting means.

As shown in Figure 12, the transportation unit 280 includes, for example, a belt 280c moving in a direction in which the sheet wrapping bodies 100 are transported, and multiple pairs of head-end partition members 280a and bottom-end partition members 280b are provided on the belt 280c. More specifically, the pairs of the head-end partition members 280a and bottom-end partition members 280b are placed on the belt 280c at regular intervals in a direction in which the sheet wrapping bodies 100 are transported. The interval is determined by a thickness of a pile of the sheet wrapping bodies 100 contained in one box at the boxing unit 216.

The bottom-end partition members 280b can tilt as is shown in Figures 17 and 19. The head-end partition members 280a can tilt backward with respect to the direction in which they are headed, which is depicted by the head-end partition member 280a before the alignment screw unit 271 in Figure 12. Each head-end partition member 280a tilts as is illustrated in Figure 12 before it passes by the alignment screw unit 271, and returns to the original upright position afterward.

As shown in Figure 19, the partition member driving unit 281 comprises, for example, a solenoid and includes a rod section 281a moving back and forth. The rod section 281a pushes the bottom portion of the bottom-end partition member 280b upward when it moves forward, thereby turning the bottom-end partition member 280b as is illustrated in Figure 19. The partition member driving unit 281 is under the control of the control unit 217 based on the detection of the wrapping body sensor 279. More specifically, the control unit 217 counts the number of the sheet wrapping bodies 100 thrown into the alignment screw unit 271 based on the detection of the wrapping body sensor 279. When the control unit 217 counts up to a predetermined number, or the number of the sheet wrapping bodies 100 packed in one box at the boxing section 216, the control unit 217 controls the partition member driving unit 281 to move the rod section 281a forward. Accordingly, the sheet wrapping bodies 100 are partitioned into groups by quota, or groups each having as many as sheet wrapping bodies 100 as those packed in one box. Note that the wrapping body's top supporting unit 272 and alignment screw unit 271 are omitted in Figure 19.

The boxing unit 216 comprises the transportation unit 280 and a pusher 282 shown in Figure 12. The pusher 282 moves in a direction intersecting at right angles with a direction in which the sheet wrapping bodies 100 are transported by the transportation unit 280. In other words, the pusher 282 pushes a group of the sheet wrapping bodies 100, partitioned by a pair of the head-end partition member 280a and bottom-end partition member 280b, into a box placed with its opening opposing the pusher 282 with the transportation unit 280 in between. The pusher 282 is also controlled by the control unit 217.

According to the above structure, the sheet wrapping bodies 100 cut out by the second rotary die cut unit 25 are transported to the first defective body collecting unit 212, and the used coating sheet after the cutting out step is collected by the used coating sheet cut and collect unit 211.

Of all the sheet wrapping bodies 100 having reached the first defective body collecting section 212, those judged as being defective by the control unit 217 based on the detection results of the color sensors 233a-233d and photoelectric sensors 234a and 234b are removed at this point. As shown in Figure 14, the defective sheet wrapping bodies 100 are removed as the aft belt units 239 and 241 of the second transportation belt unit 231 turn to the collecting position.

The sheet wrapping bodies 100 having passed by the first defective body collecting section 212 are transported further to the translucent defective body detecting section 213 by the second transportation belt unit 231. As set forth in TABLE 1 above, the translucent defective body detecting section 213 measures the dimension of the product, namely, the sheet wrapping body 100, and the dimension of the oxygen absorbing sheet tip 30 inside thereof, and detects the presence of the oxygen absorbing sheet tip 30. The control unit 217 judges whether the sheet wrapping body 100 in question is defective or not based on the detection result, and those judged as being defective are removed at the second defective body collecting section 214.

In the translucent defective body detecting section 213, the sheet wrapping bodies 100 are transported afloat on the glass plate 254 by an airflow from the transportation blower 255. While each sheet wrapping body 100 passes by the glass plate 254, the light source 251 irradiates light onto the sheet wrapping body 100, and the camera section 252 picks up the image thereof.

The sheet wrapping bodies 100, having passed by the glass plate 254, are further transported under the defective body removing unit 262 by the lower transportation belt unit 263 and the upper-forward transportation belt unit 264 of the second defective body collecting unit 214. The sheet wrapping bodies 100 are transported by the lower transportation belt unit 263 alone under the defective body removing unit 262. When the sheet wrapping body 100 judged as being defective is transported under the defective body removing unit 262, the belt 262a thereof comes down onto the sheet wrapping body 100 from above and spins off the same from the transportation belt unit 263.

The sheet wrapping bodies 100 having passed by the defective body removing unit 262 are supplied to the alignment screw unit 271 of the aligning and transporting unit 215 by the lower transportation belt unit 263 and upper-aft transportation belt unit 265.

Then, the sheet wrapping bodies 100 are transported further downward while being fastened by the belts 263a and 265a at the end portions of the lower transportation belt unit 263 and upper-aft transportation belt 265, and thrown into a space between the pair of alignment screws 276 and 277 of the alignment screw unit 271 by being guided by the guide roller 274.

The sheet wrapping bodies 100 stand upright in the space between the alignment screws 276 and 277 as the both side portions are supported by the same, respectively. More specifically, one end portion of each sheet wrapping body 100 is placed between two spiral blades 276a of the alignment screw 276, while the other end portion is placed between two spiral blades 277a of the alignment screw 277. Thus, the sheet wrapping bodies 100 are transported toward the boxing section 216 as the alignment screws 276 and 277 rotate.

Two opposing sides of each sheet wrapping body 100 having passed by the end portion of the alignment screws 276 and 277 are guided by the side portion guides 278 shown in Figure 18. Also, the top of a sheet wrapping body 100 at the head of those on the lower guide plate 275 is supported by the supporting member 272b of the body's top supporting unit 272. The supporting member 272b moves as the sheet wrapping bodies 100 move in the direction in which they are headed. As a result, the sheet wrapping bodies 100 are supported so as not to fall forward.

When the sheet wrapping bodies 100 are transported by the alignment screw unit 271, the head-end partition member 280a of the transportation unit 280 in the quota transportation unit 273 is situated ahead of the sheet wrapping bodies 100 in a direction in which they are transported. On the other hand, the bottom-end partition member 280b is situated around the top end of the alignment screws 276 and 277 placed in the lower stream with respect to the transportation direction.

The control unit 217 counts up the number of the sheet wrapping bodies 100 thrown into the alignment screw unit 271 based on the detection result of the wrapping body sensor 279. When the control unit 217 counts up to a predetermined number, for example, 300, the control unit 217 activates the partition member driving unit 281. Accordingly, as shown in Figure 19, the bottom-end partition member 280b tilts toward the sheet wrapping bodies 100 thrown into the alignment screw unit 271. Thus, the sheet wrapping bodies 100 thrown into the alignment screw unit 271 after the bottom-end partition member 280b has tilted are thrown behind the bottom-end partition member 280b. As a result, exactly 300 of the sheet wrapping bodies 100 are held between one pair of head-end partition member 280a and bottom-end partition member 280b.

After the bottom-end partition member 280b has tilted, the pair of the head-end partition member 280a and bottom-end partition member 280b moves forward as the belt 280c moves from the side of the alignment screw 271 of Figure 12 and stops at a position between the alignment screw unit 271 and pusher 282. This means that the belt 280c, namely, the transportation unit 280, operates intermittently.

While the transportation unit 280 operates, another pair of the head-end partition member 280a and bottom-end partition member 280b following the above-mentioned pair moves to a predetermined position with respect to the alignment screw unit 271. As shown in Figure 12, the head-end partition member 280a of the secondly mentioned pair tilts backward with respect to the transportation direction and passes by the alignment screws 271a and 271b, and returns to the original upright position afterwards.

Further, the firstly mentioned pair of the head-end partition member 280a and bottom-end partition member 280b placed between the alignment screw unit 271 and pusher 282 reach a position corresponding to the pusher 282 as shown in Figure 12 as the transportation unit 280 rotates. Thus, as the pusher 282 operates, 300 of sheet wrapping bodies 100 aligned between the head-end partition member 280a and bottom-end partition member 280b are pushed into a box placed with its opening opposing the pusher 282, thereby packing the sheet wrapping bodies 100 into the box.

As has been explained, in the sheet wrapping body producing apparatus of the present embodiment, defective sheet wrapping bodies 100 are checked twice: by the color sensors 233a-233c and the photoelectric sensors 234a and 234b, and by the translucent defective body detecting section 213. Thus, the tasks of each defective body detecting section are reduced. For this reason, although the sheet wrapping body producing apparatus of the present embodiment operates at high speeds, the defective bodies are removed in a more secured manner.

In particular, one of the most important checking items, namely, the detection of the presence of the oxygen absorbing sheet tips 30 inside of the sheet wrapping body 100, is checked in advance by detecting the pitches between the oxygen absorbing sheet tips 30 by the color sensor 233d. Thus, the translucent defective body detecting section 213 can be less responsible for checking the presence of the oxygen absorbing sheet tips 30, but the checking as a whole is carried out in a more secured manner.

In addition, the sheet wrapping bodies 100 cut out by the second rotary die cut unit 25 are transported to the alignment screw unit 271 by the aligning and transporting section 215, and aligned upright so that the surfaces thereof oppose each other. This facilitates the alignment, and hence the packing of multiple sheet wrapping bodies 100.

## Claims

1. A sheet wrapping body producing apparatus comprising:
a supply unit (1) of a sheet material (6) subject to wrapping;
a first cut unit (21);
a transportation unit (23);
a bottom coating material supply unit (3);
a top coating material supply unit (4);
a seal unit (24); and
a second cut unit (25),
wherein,
said supply unit (1) of a sheet material (6) subject to wrapping supplies a strip of a sheet material (6) subject to wrapping to said first cut unit (21);
said first cut unit (21) comprises a first pair of rotating roller (27, 28), and cuts out sheet tips (30) subject to wrapping from said strip of the sheet material subject to wrapping
said transportation unit transports said sheet tips (30) subject to wrapping made by said first cut unit onto a bottom coating material (7) while said transportation unit holds each said sheet tip subject to wrapping such that no misalignment is caused,
said bottom coating material supply unit (3) supplies a strip of said bottom coating material (7) onto a transportation surface (62) of said transportation unit, and said bottom coating material (7) is further transported to a farther position by way of said seal unit (24) and said second cut unit (25),
said top coating material supply unit (4) supplies a strip of a top coating material (8) onto said sheet tips (30) subject to wrapping placed on said bottom coating material (7), and said top coating material (8) is further transported to a farther position by way of said seal unit (24) and said second cut unit (25),
said seal unit (24) is provided in a stage following said transportation unit (23), comprises a second pair of rotating rollers (71, 72), and seals said top coating material (8) and said bottom coating material (7) to wrap up said sheet tips (30) subject to wrapping individually, and
said second cut unit (25) comprises a third pair of rotating rollers (81, 82), and cuts said top coating material (8) and said bottom coating material (7) in a sealed portion made by said seal unit (24) and produces sheet wrapping bodies (100) each respectively wrapping the sheet tip (30) subject to wrapping.

2. The sheet wrapping body producing apparatus as defined in Claim 1, wherein:
one of said first pair of rotating rollers of said first cut unit is a first attracting roller (28), said first attracting roller (28) being rotatable while attracting said sheet tips (30) subject to wrapping; and
said transportation unit includes a second attracting roller (22) opposing said first attracting roller (28), whereby said sheet tips (30) subject to wrapping are delivered from said first attracting roller to said second attracting roller and transported forward through attraction.

3. The sheet wrapping body producing apparatus as defined in Claim 2, wherein said first attracting roller (28) includes separate holes of suction sections (39) along a circumference of said first attracting roller for attracting said sheet tips (30) subject to wrapping, said suction sections having their respective openings (39b) on an outer surface of said first attracting roller, a negative pressure being supplied only to some of said suction sections (39) having moved into a range where said sheet tips (30) subject to wrapping are attracted.

4. The sheet wrapping body producing apparatus as defined in Claim 3, wherein a positive pressure is supplied only to at least one of said suction sections (39) having moved to a range where said sheet tips subject to wrapping are delivered to said second attracting roller (22).

5. The sheet wrapping body producing apparatus as defined in Claim 2, wherein said second attracting roller (22, 52) includes separate holes of suction sections (58) along a circumference of said second attracting roller for attracting said sheet tips (30) subject to wrapping, said suction sections (58) having their respective openings (58b) on an outer surface of said second attracting roller, a negative pressure being supplied only to some of said suction sections (58) having moved into a range where the sheet tips subject to wrapping are attracted.

6. The sheet wrapping body producing apparatus as defined in any of Claims 2 to 5, wherein said first attracting roller (28) and said second attracting roller (22, 52) rotate at different peripheral speeds, whereby said sheet tips (30) subject to wrapping are transported forward at regular intervals.

7. The sheet wrapping body producing apparatus as defined in any of Claims 2 to 6, wherein:
said transportation unit (23) includes, at a stage following said second attracting roller (22, 52), an upper transportation belt unit (61) and a lower transportation belt unit (62), said upper transportation belt unit and said lower transportation belt unit opposing each other vertically to enable fastening of said sheet tips (30) subject to wrapping;
said bottom coating material (7) is supplied onto a transportation surface of said lower transportation belt unit (62);
an outer surface of said second attracting roller (52) is smaller than each said sheet tip (30) subject to wrapping in width, the outer surface opposing said lower transportation belt unit (62); and
said upper transportation belt unit (61) includes at least one belt (61a) along each of two opposing side surfaces of said second attracting roller (52), an interval of said belts being smaller than each said sheet tip (30) subject to wrapping in width.

8. The sheet wrapping body producing apparatus as defined in any of Claims 1 to 7, wherein:
said transportation unit (23) includes an upper transportation unit (61) and a lower transportation unit (62), said upper transportation unit and said lower transportation unit opposing each other vertically to enable fastening of said sheet tips (30) subject to wrapping, a downstream end portion of said lower transportation unit (62) with respect to a direction in which said sheet tips (30) subject to wrapping are transported extending in said direction compared with a corresponding end portion of said upper transportation unit (61);
said bottom coating material (7) is supplied onto a transportation surface of said lower transportation unit (62);
said top coating material supply unit (4) includes a guide roller (63) for guiding said top coating material onto said sheet tips subject to wrapping placed on said lower transportation unit, said roller (63) being provided above said lower transportation unit (62) at a lower stream with respect to a direction in which said sheet tips (30) subject to wrapping are transported by said upper transportation unit (61), said guide roller (63), together with said lower transportation unit (62), transporting said sheet tips (30) subject to wrapping while fastening said sheet tips subject to wrapping, said guide roller (63) being provided at a position enabling fastening of a top end portion of each said sheet tip (30) subject to wrapping with said lower transportation unit (62) while a bottom end portion thereof is fastened by said lower transportation unit and said upper transportation unit.

9. A sheet wrapping body producing apparatus as defined in claim 1, wherein:
said first cut unit (21) cuts out said sheet tips (30) subject to wrapping from said sheet material subject to wrapping using said first pair of rotating rollers (27, 28) in a direction in which said first pair of rotating rollers rotate without leaving any unwanted space between two adjacent sheet tips (30) subject to wrapping, one of said first pair of rotating rollers serving as a first attracting roller (28) capable of rotating while attracting said sheet tips subject to wrapping,
a second attracting roller (22) is placed to oppose said first attracting roller (28), said second attracting roller transporting said sheet tips subject to wrapping delivered from said first attracting roller to said transportation unit (23) through attraction, said first attracting roller (28) and said second attracting roller (22) rotating at different peripheral speeds, whereby two adjacent sheet tips (30) subject to wrapping have a space as wide as a sealed portion made by said seal unit (24).

10. A sheet wrapping body producing apparatus as defined in any of claims 1 to 9 further comprising:
first defect detecting means (233) for detecting a defect in said supplied materials;
first removing means (212) for removing a defective sheet wrapping body caused by a defect detected by said first defect detecting means;
second defect detecting means (213) for detecting a defect of the sheet wrapping bodies, said second defect detecting means being provided in a stage following said first removing means; and
second removing means (214) for removing a sheet wrapping body defected as being defective by said second defect detecting means.

11. The sheet wrapping body producing apparatus as defined in Claim 10, wherein:
said strip of the material subject to wrapping is a sheet; and
said first defect detecting means (233a, b, c) detects a seam jointing the sheet material subject to wrapping and another sheet material subject to wrapping supplied to said sheet wrapping body producing means.

12. The sheet wrapping body producing apparatus as defined in Claim 10 or 11, wherein:
said strip of the coating material is a bottom coating material (7); and
said first defect detecting means (233a, b, c) detects a seam jointing the bottom coating material and another bottom coating material supplied to said sheet wrapping body producing means.

13. The sheet wrapping body producing apparatus as defined in Claim 10 or 11, wherein:
said strip of the coating material is a top coating material (8); and
said first defect detecting means (233a, b, c) detects a seam jointing the top coating material and another top coating material supplied to said sheet wrapping body producing means.

14. The sheet wrapping body producing apparatus as defined in Claim 10 or 11, wherein:
said strip of the coating material is a bottom coating material (7); and
said first defect detecting means (234a) detects misalignment from a normal position of said bottom coating material (7) supplied to said sheet wrapping body producing means.

15. The sheet wrapping body producing apparatus as defined in Claim 10 or 11, wherein:
said strip of the coating material is a top coating material (8); and
said first defect detecting means (234b) detects misalignment from a normal position of said top coating material (8) supplied to said sheet wrapping body producing means.

16. The sheet wrapping body producing apparatus as defined in Claim 10, wherein:
said strip of the material subject to wrapping is a sheet;
said sheet wrapping body producing means cuts out sheet tips (30) subject to wrapping from said sheet material subject to wrapping, transports said sheet tips subject to wrapping at regular pitches, wraps up said sheet tips subject to wrapping in said coating material, and cuts out sheet wrapping bodies from a resulting wrapped body at said regular pitches; and
said first defect detecting means (233d) detects whether a pitch between two adjacent sheet wrapping bodies varies from said regular pitch or not.

17. The sheet wrapping body producing apparatus as defined in any of Claims 10 to 16, wherein said second defect detecting means (213) picks up an image of each said sheet wrapping body and judges whether the sheet wrapping body in question is defective or not based on the image thereof.

18. The sheet wrapping body producing apparatus as defined in any of Claims 10 to 17, wherein at least one of said first removing means (212) and said second removing means (214) includes:
rotational removing means (239, 241) for removing a defective sheet wrapping body by bringing a rotating portion thereof into contact with said defective sheet wrapping body; and
driving means (237) for bringing said rotational removing means into contact with the defective sheet wrapping body and for keeping said rotational removing means separated from a non-defective sheet wrapping body subject to further transportation.

19. A sheet wrapping body producing apparatus as defined in any of claims 1 to 18 further comprising:
aligning and transporting means (215) including a pair of alignment screws (276, 277), each said alignment screw having a series of spiral blades (276a, 277a), said alignment screws being aligned in parallel with a predetermined space in between; and
carrying means for transporting each said sheet wrapping body (100) in horizontal position and for carrying each said sheet wrapping body into the space between said pair of alignment screws (276, 277) in upright position,
wherein,
said aligning and transporting means holds one side portion of each said sheet wrapping body (100) between the blades (276a) of one of said alignment screws and the other side portion between the blades (277a) of the other alignment screw to keep each said sheet wrapping body in upright position in the space between said pair of alignment screws; and
said pair of alignment screws (276, 277) are driven to rotate to transport the sheet wrapping bodies in a direction in which said sheet wrapping bodies should be transported.

20. The sheet wrapping body producing apparatus as defined in Claim 19, wherein said aligning and transporting means (215) further includes:
a side portion guide (278) for guiding the two side portions of the sheet wrapping body having passed by an end portion of said pair of alignment screws as said pair of alignment screws rotate; and
supporting means (272) for supporting a top end of a head sheet wrapping body (100) of the sheet wrapping bodies being transported, whereby said sheet wrapping bodies do not tilt in a direction in which said sheet wrapping bodies are transported.

21. The sheet wrapping body producing apparatus as defined in Claim 19, wherein said aligning and transporting means (215) further includes:
counting means (217, 279) for counting the number of the sheet wrapping bodies carried into the space between said pair of alignment screws by said carrying means; and
partition means (281) when said counting means counts up to a predetermined value, for partitioning the sheet wrapping bodies (100) into a group having as many sheet wrapping bodies as said predetermined value, and for transporting said group of sheet wrapping bodies to a predetermined position.

22. A method of producing a sheet wrapping body comprising the steps of:
cutting out sheet tips (30) subject to wrapping from a strip of a sheet material (6) subject to wrapping using a first pair of rotating rollers (27, 28);
transporting said sheet tips subject to wrapping onto a strip of a bottom coating material (7) while holding each said sheet tip subject to wrapping not to cause misalignment;
supplying a strip of a top coating material (8) onto said sheet tips subject to wrapping provided on said bottom coating material;
sealing said top coating material (8) and said bottom coating material (7) to wrap up said sheet tips (30) subject to wrapping individually using a second pair of rotating rollers (71, 72); and
producing sheet wrapping bodies each respectively wrapping the sheet tips subject to wrapping by cutting said top coating material and said bottom coating material in a sealed portion made in said sealing step using a third pair of rotating rollers (81, 82).

23. A method of producing a sheet wrapping body as defined in claim 22, wherein
said sheet tips (30) subject to wrapping from a strip of a sheet material subject to wrapping being cut out by using a first pair of rotating rollers (27, 28) in a direction in which said first pair of rotating rollers rotate without leaving any unwanted space between two adjacent sheet tips subject to wrapping; and further comprising the steps of:
attracting said sheet tips subject to wrapping using one of said first pair of rotating rollers as a first attracting roller (28) and transporting said sheet tips subject to wrapping forward; and
delivering said sheet tips subject to wrapping being attracted to said first attracting roller (28) to a second attracting roller (22) capable of attracting said sheet tips subject to wrapping while rotating at a peripheral speed different from a peripheral speed at which said first attracting roller (28) rotates to secure a space for sealing between two adjacent sheet tips (30) subject to wrapping.

## Patentansprüche

1. Vorrichtung zur Herstellung von blattumhüllenden Körpern, die aufweist:
eine Zuführungseinheit (1) für ein zu umhüllendes Blattmaterial (6);
eine erste Schneideinheit (21);
eine Transporteinheit (23);
eine untere Beschichtungsmaterial-Zuführungseinheit (3);
eine obere Beschichtungsmaterial-Zuführungseinheit (4);
eine Verschließeinheit (24); und
eine zweite Schneideinheit (25),
wobei,
die Zuführungseinheit (1) für ein zu umhüllendes Blattmaterial (6) einen zu umhüllenden Blattmaterialstreifen (6) an die erste Schneideinheit (21) zuführt,
die erste Schneideinheit (21) ein erstes Paar rotierender Walzen (27, 28) aufweist und zu umhüllende Blattenden (30) aus dem zu umhüllenden Blattmaterialstreifen ausschneidet,
die Transporteinheit die von der ersten Schneideinheit hergestellten zu umhüllenden Blattenden (30) auf ein unteres Beschichtungsmaterial (7) transportiert, während die Transporteinheit jedes zu umhüllende Blattende derart hält, daß keine falsche Ausrichtung bewirkt wird,
die untere Beschichtungsmaterial-Zuführungseinheit (3) einen Streifen aus dem unteren Beschichtungsmaterial (7) auf eine Transportoberfläche (62) der Transporteinheit zuführt und das untere Beschichtungsmaterial (7) über die zweite Verschließeinheit (24) und die zweite Schneideinheit (25) weiter zu einer entfernteren Position transportiert wird,
die obere Beschichtungsmaterial-Zuführungseinheit (4) einen Streifen aus oberem Beschichtungsmaterial (8) auf die zu umhüllenden Blattenden (30), die auf dem unteren Beschichtungsmaterial (7) angeordnet sind, zuführt und das obere Beschichtungsmaterial (8) über die Verschließeinheit (24) und die zweite Schneideinheit (25) weiter zu einer weiter entfernteren Position transportiert wird,
die Verschließeinheit (24) in einem der Transporteinheit (23) folgenden Abschnitt vorgesehen ist, ein zweites Paar rotierender Walzen (71, 72) aufweist und das obere Beschichtungsmaterial (8) und das untere Beschichtungsmaterial (7) verschließt, um die zu umhüllenden Blattenden (30) einzeln zu umhüllen, und
die zweite Schneideinheit (25) ein drittes Paar rotierender Walzen (81, 82) aufweist und das obere Beschichtungsmaterial (8) und das untere Beschichtungsmaterial (7) in einen durch die Verschließeinheit (24) hergestellten verschlossenen Abschnitt schneidet und blattumhüllende Körper (100) herstellt, die jeweils das zu umhüllende Blattende (30) umhüllen.

2. Vorrichtung zur Herstellung von blattumhüllenden Körpern nach Anspruch 1, wobei
eine Walze des ersten rotierenden Walzenpaares der ersten Schneideinheit eine erste Anzugswalze (28) ist, die erste Anzugswalze (28) drehbar ist, während sie die zu umhüllenden Blattenden (30) anzieht; und
die Transporteinheit eine zweite Anzugswalze (22) aufweist, die entgegengesetzt zur ersten Anzugswalze (28) ist, wodurch die zu umhüllenden Blattenden (30) von der ersten Anzugswalze an die zweite Anzugswalze übergeben werden und durch Anziehung vorwärts transportiert werden.

3. Vorrichtung zur Herstellung von blattumhüllenden Körpern nach Anspruch 2, wobei die erste Anzugswalze (28) getrennte Löcher von Saugabschnitten (39) entlang eines Umfangs der ersten Anzugswalze zum Anziehen der zu umhüllenden Blattenden (30) aufweist, wobei die Saugabschnitte ihre jeweiligen Öffnungen (39b) auf einer Außenoberfläche der ersten Anzugswalze haben, wobei nur bei einigen der Saugabschnitte (39), die sich in einen Bereich bewegt haben, wo die zu umhüllenden Blattenden (30) angezogen werden, ein negativer Druck erzeugt wird.

4. Vorrichtung zur Herstellung von blattumhüllenden Körpern nach Anspruch 3, wobei nur bei mindestens einem der Saugabschnitte (39), die sich in einen Bereich bewegt haben, wo die zu umhüllenden Blattenden an die zweite Anzugswalze (22) übergeben werden, ein positiver Druck erzeugt wird.

5. Vorrichtung zur Herstellung von blattumhüllenden Körpern nach Anspruch 2, wobei die zweite Anzugswalze (22, 52) getrennte Löcher von Saugabschnitten (58) entlang eines Umfangs der zweiten Anzugswalze zum Anziehen der zu umhüllenden Blattenden (30) aufweist, wobei die Saugabschnitte (58) ihre jeweiligen Öffnungen (58b) auf einer äußeren Oberfläche der zweiten Anzugswalze haben, wobei nur bei einigen der Saugabschnitte (58), die sich in einen Bereich bewegt haben, wo die zu umhüllenden Blattenden angezogen werden, ein negativer Druck erzeugt wird.

6. Vorrichtung zur Herstellung von blattumhüllenden Körpern nach einem der Ansprüche 2 bis 5, wobei die erste Anzugswalze (28) und die zweite Anzugswalze (22, 52) sich mit unterschiedlichen Umfangsgeschwindigkeiten drehen, wodurch die zu umhüllenden Blattenden (30) in regelmäßigen Abständen vorwärts transportiert werden.

7. Vorrichtung zur Herstellung von blattumhüllenden Körpern nach einem der Ansprüche 2 bis 6, wobei
die Transporteinheit (23) in einem der zweiten Anzugswalze (22, 52) folgenden Abschnitt eine obere Transportriemeneinheit (61) und eine untere Transportriemeneinheit (62) umfaßt, wobei die obere Transportriemeneinheit und die untere Transportriemeneinheit vertikal entgegengesetzt zueinander sind, um das Befestigen der zu umhüllenden Blattenden (30) zu ermöglichen;
das untere Beschichtungsmaterial (7) auf eine Transportoberfläche der unteren Transportriemeneinheit (62) zugeführt wird;
eine äußere Oberfläche der zweiten Anzugswalze (52) kleiner als die Breite jedes zu umhüllenden Blattendes (30) ist und die äußere Oberfläche der unteren Transportriemeneinheit (62) entgegengesetzt ist; und
die obere Transportriemeneinheit (61) mindestens einen Riemen (61a) entlang jeder der zwei entgegengesetzten seitlichen Oberflächen der zweiten Anzugswalze (52) aufweist und ein Abstand der Riemen kleiner als die Breite jedes zu umhüllenden Blattendes (30) ist.

8. Vorrichtung zur Herstellung von blattumhüllenden Körpern nach einem der Ansprüche 1 bis 7, wobei
die Transporteinheit (23) eine obere Transporteinheit (61) und eine untere Transporteinheit (62) aufweist, wobei die obere Transporteinheit und die untere Transporteinheit zueinander vertikal entgegengesetzt sind, um das Befestigen der zu umhüllenden Blattenden (30) zu ermöglichen, wobei sich ein Endteil der unteren Transporteinheit (62) im Vergleich zu einem entsprechenden Endteil der oberen Transporteinheit (61) in die Richtung erstreckt, in der die zu umhüllenden Blattenden (30) transportiert werden;
das untere Beschichtungsmaterial (7) auf eine Transportoberfläche der unteren Transporteinheit (62) zugeführt wird;
die obere Beschichtungsmaterial-Zuführungseinheit (4) eine Führungswalze (63) zum Führen des oberen Beschichtungsmaterials auf die zu umhüllenden Blattenden, die auf der unteren Transporteinheit angeordnet sind, aufweist, wobei die Walze (63) relativ zu einer Richtung, in der die zu umhüllenden Blattenden (30) von der oberen Transporteinheit (61) transportiert werden, weiter hinten im Ablauf über der unteren Transporteinheit (62) vorgesehen ist, wobei die Führungswalze (63) zusammen mit der unteren Transporteinheit (62) die zu umhüllenden Blattenden (30) transportiert, während die zu umhüllenden Blattenden festgehalten werden, wobei die Führungswalze (63) an einer Position vorgesehen ist, die das Befestigen eines oberen Endabschnitts jedes zu umhüllenden Blattendes (30) mit der unteren Transporteinheit (62) ermöglicht, während ein unterer Endabschnitt davon von der unteren Transporteinheit und der oberen Transporteinheit befestigt wird.

9. Vorrichtung zur Herstellung von blattumhüllenden Körpern nach Anspruch 1, wobei
die erste Schneideinheit (21) unter Verwendung des ersten rotierenden Walzenpaares (27, 28) die zu umhüllenden Blattenden (30) in einer Richtung aus dem zu umhüllenden Blattmaterial ausschneidet, in der das erste Walzenpaar rotiert, ohne einen unerwünschten Zwischenraum zwischen zwei benachbarten zu umhüllenden Blattenden (30) zu lassen, wobei eine Walze des ersten rotierenden Walzenpaars als eine erste Anzugswalze (28) dient, die in der Lage ist, zu rotieren, während sie die zu umhüllenden Blattenden anzieht,
eine zweite Anzugswalze (22) entgegengesetzt zur ersten Anzugswalze (28) angeordnet ist, wobei die zweite Anzugswalze die von der ersten Anzugswalze durch Anziehung übergebenen zu umhüllenden Blattenden an die Transporteinheit (23) transportiert, wobei sich die erste Anzugswalze (28) und die zweite Anzugswalze (22) mit unterschiedlichen Umfangsgeschwindigkeiten drehen, wodurch zwei benachbarte zu umhüllende Blattenden (30) einen Platz haben, der so breit ist, wie ein von der Verschließeinheit (24) hergestellter verschlossener Abschnitt.

10. Vorrichtung zur Herstellung von blattumhüllenden Körpern nach einem der Ansprüche 1 bis 9, die ferner aufweist:
eine erste Fehlerdetektionseinrichtung (233) zum Detektieren eines Fehlers in den zugeführten Materialien;
eine erste Entfernungseinrichtung (212) zum Entfernen eines fehlerhaften blattumhüllenden Körpers, bewirkt durch einen von der ersten Fehlerdetektionseinrichtung detektierten Fehler;
eine zweite Fehlerdetektionseinrichtung (213) zum Detektieren eines Fehlers der blattumhüllenden Körper, wobei die zweite Fehlerdetektionseinrichtung in einem der ersten Entfernungseinrichtung folgenden Abschnitt vorgesehen ist;
eine zweite Entfernungseinrichtung (214) zum Entfernen eines von der zweiten Fehlerdetektionseinrichtung als fehlerhaft detektierten blattumhüllenden Körpers.

11. Vorrichtung zur Herstellung von blattumhüllenden Körpern nach Anspruch 10, wobei
der Streifen aus dem zu umhüllenden Material ein Blatt ist; und
die erste Fehlerdetektionseinrichtung (233a, b, c) eine Naht detektiert, die das zu umhüllende Blattmaterial und ein anderes der Vorrichtung zur Herstellung von blattumhüllenden Körpern zugeführtes zu umhüllendes Blattmaterial verbindet.

12. Vorrichtung zur Herstellung von blattumhüllenden Körpern nach Anspruch 10 oder 11, wobei
der Streifen aus dem Beschichtungsmaterial ein unteres Beschichtungsmaterial (7) ist und
die erste Fehlerdetektionseinrichtung (233a, b, c) eine Naht detektiert, die das untere Beschichtungsmaterial und ein anderes der Vorrichtung zur Herstellung von blattumhüllenden Körpern zugeführtes unteres Beschichtungsmaterial verbindet.

13. Vorrichtung zur Herstellung von blattumhüllenden Körpern nach Anspruch 10 oder 11, wobei
der Streifen aus dem Beschichtungsmaterial ein oberes Beschichtungsmaterial (8) ist und
die erste Fehlerdetektionseinrichtung (233a, b, c) eine Naht detektiert, die das obere Beschichtungsmaterial und ein anderes der Vorrichtung zur Herstellung von blattumhüllenden Körpern zugeführtes oberes Beschichtungsmaterial verbindet.

14. Vorrichtung zur Herstellung von blattumhüllenden Körpern nach Anspruch 10 oder 11, wobei
der Streifen aus dem Beschichtungsmaterial ein unteres Beschichtungsmaterial (7) ist und
die erste Fehlerdetektionseinrichtung (234a) eine gegenüber einer Normalposition falsche Ausrichtung des der Vorrichtung zur Herstellung von blattumhüllenden Körpern zugeführten unteren Beschichtungsmaterials (7) detektiert.

15. Vorrichtung zur Herstellung von blattumhüllenden Körpern nach Anspruch 10 oder 11, wobei
der Streifen aus dem Beschichtungsmaterial ein oberes Beschichtungsmaterial (8) ist und
die erste Fehlerdetektionseinrichtung (234b) eine gegenüber einer Normalposition falsche Ausrichtung des der Vorrichtung zur Herstellung von blattumhüllenden Körpern zugeführten oberen Beschichtungsmaterials (8) detektiert.

16. Vorrichtung zur Herstellung von blattumhüllenden Körpern nach Anspruch 10, wobei
der Streifen aus dem zu umhüllenden Material ein Blatt ist;
die Vorrichtung zur Herstellung von blattumhüllenden Körpern zu umhüllende Blattenden (30) aus dem zu umhüllenden Blattmaterial ausschneidet, die zu umhüllenden Blattenden in regelmäßigen Abständen transportiert, die zu umhüllenden Blattenden in das Beschichtungsmaterial einhüllt und blattumhüllende Körper in regelmäßigen Abständen aus einem sich ergebenden umhüllten Körper ausschneidet; und
die erste Fehlerdetektionseinrichtung (233d) detektiert, ob ein Abstand zwischen zwei benachbarten blattumhüllenden Körpern von dem regelmäßigen Abstand abweicht oder nicht.

17. Vorrichtung zur Herstellung von blattumhüllenden Körpern nach einem der Ansprüche 10 bis 16, wobei die zweite Fehlerdetektionseinrichtung (213) ein Bild von jedem blattumhüllenden Körper aufnimmt und auf der Grundlage seines Bildes entscheidet, ob der fragliche blattumhüllende Körper fehlerhaft ist oder nicht.

18. Vorrichtung zur Herstellung von blattumhüllenden Körpern nach einem der Ansprüche 10 bis 17, wobei mindestens eine der ersten Entfernungseinrichtungen (212) oder zweiten Entfernungseinrichtungen (214) aufweist:
eine rotierende Entfernungseinrichtung (239, 241) zum Entfernen eines fehlerhaften blattumhüllenden Körpers, indem ein rotierender Teil davon in Berührung mit dem fehlerhaften blattumhüllenden Körper gebracht wird; und
eine Antriebseinrichtung (237), um die rotierende Entfernungseinrichtung mit dem fehlerhaften blattumhüllenden Körper in Berührung zu bringen und um die rotierende Entfernungseinrichtung von einem nicht fehlerhaften blattumhüllenden Körper, der weiter transportiert werden soll, getrennt zu halten.

19. Vorrichtung zur Herstellung von blattumhüllenden Körpern nach einem der Ansprüche 1 bis 18, die ferner aufweist:
eine Ausrichte- und Transporteinrichtung (215) mit einem Paar Ausrichtungsschrauben (276, 277), wobei jede Ausrichtungsschraube eine Reihe von Spiralführungsblechteilen (276a, 277a) hat und die Ausrichtungsschrauben mit einem vorbestimmten Zwischenraum dazwischen parallel ausgerichtet sind; und
eine Beförderungseinrichtung zum Transportieren jedes blattumhüllenden Körpers (100) in horizontaler Lage und zum Befördern jedes der blattumhüllenden Körper in den Zwischenraum zwischen dem Paar von Ausrichtungsschrauben (271, 277) in aufrechter Lage, wobei
die Ausrichte- und Transporteinrichtung einen Seitenabschnitt jedes blattumhüllenden Körpers (100) zwischen den Blechen (276a) einer der Ausrichtungsschrauben und den anderen Seitenabschnitt zwischen den Blechen (277a) der anderen Ausrichtungsschraube hält, um den blattumhüllenden Körper in aufrechter Lage in dem Zwischenraum zwischen dem Paar Ausrichtungsschrauben zu halten; und
das Paar Ausrichtungsschrauben (276, 277) angetrieben wird, so daß es rotiert, um die blattumhüllenden Körper in eine Richtung zu transportieren, in die die blattumhüllenden Körper transportiert werden sollen.

20. Vorrichtung zur Herstellung von blattumhüllenden Körpern nach Anspruch 19, wobei die Ausrichte- und Transporteinrichtung (215) ferner aufweist:
eine Seitenabschnittführung (278) zum Führen der zwei Seitenabschnitte des blattumhüllenden Körpers, der einen Endabschnitt des Ausrichtungsschraubenpaars passiert hat, während das Ausrichtungsschraubenpaar rotiert; und
eine Halteeinrichtung (272) zum Halten eines oberen Endes eines Kopfes eines blattumhüllenden Körpers (100) der transportierten blattumhüllenden Körper, wodurch die blattumhüllenden Körper nicht in einer Richtung, in die die blattumhüllenden Körper transportiert werden, kippen.

21. Vorrichtung zur Herstellung von blattumhüllenden Körpern nach Anspruch 19, wobei die Ausrichte- und Transporteinrichtung (215) ferner aufweist:
eine Zähleinrichtung (217, 279) zum Zählen der Anzahl der blattumhüllenden Körper, die von der Beförderungseinrichtung in den Zwischenraum zwischen dem Paar Ausrichtungsschrauben befördert werden; und
eine Trenneinrichtung (281) zum Trennen der blattumhüllenden Körper (100) in eine Gruppe mit einer einem vorbestimmten Wert entsprechenden Anzahl von blattumhüllenden Körpern und zum Transportieren dieser Gruppe von blattumhüllenden Körpern zu einer vorbestimmten Position, wenn die Zähleinrichtung bis zu einem vorbestimmten Wert hochzählt.

22. Verfahren zur Herstellung eines blattumhüllenden Körpers, das die folgenden Schritte aufweist:
Ausschneiden der zu umhüllenden Blattenden (30) aus einem zu umhüllenden Blattmaterialstreifen (6) unter Verwendung eines ersten Paars rotierender Walzen (27, 28);
Transportieren der zu umhüllenden Blattenden auf einen Streifen aus unterem Beschichtungsmaterial (7), während jedes der zu umhüllenden Blattenden gehalten wird, um keine falsche Ausrichtung zu bewirken;
Zuführen eines Streifens aus einem oberen Beschichtungsmaterial (8) auf die zu umhüllenden Blattenden, die auf dem unteren Beschichtungsmaterial vorgesehen sind;
Verschließen des oberen Beschichtungsmaterials (8) und des unteren Beschichtungsmaterials (7), um die zu umhüllenden Blattenden (30) unter Verwendung eines zweiten Paars rotierender Walzen (71, 72) einzeln zu umhüllen; und
Herstellen von blattumhüllenden Körpern, die jeweils die zu umhüllenden Blattenden umhüllen, unter Verwendung eines dritten Paars rotierender Walzen (81, 82), indem das obere Beschichtungsmaterial und das untere Beschichtungsmaterial in einem verschlossenen Abschnitt, der in dem Verschließschritt gefertigt wurde, geschnitten werden.

23. Verfahren zur Herstellung eines blattumhüllenden Körpers nach Anspruch 22, wobei
die zu umhüllenden Blattenden (30) aus einem Streifen aus zu umhüllendem Blattmaterial unter Verwendung eines ersten Paars rotierender Walzen (27, 28) in einer Richtung ausgeschnitten werden, in der das erste Paar rotierender Walzen (27, 28) sich dreht, ohne einen unerwünschten Zwischenraum zwischen zwei benachbarten zu umhüllenden Blattenden zu lassen; und das ferner die folgenden Schritte aufweist:
Anziehen der zu umhüllenden Blattenden unter Verwendung einer Walze des ersten rotierenden Walzenpaares als eine erste Anzugswalze (28) und vorwärts Transportieren der zu umhüllenden Blattenden; und
Übergeben der zu umhüllenden Blattenden, die von der ersten Anzugswalze (28) angezogen werden, an eine zweite Anzugswalze (22), die in der Lage ist, die zu umhüllenden Blattenden anzuziehen, während sie sich mit einer Umfangsgeschwindigkeit dreht, die sich von der Umfangsgeschwindigkeit, mit der sich die erste Anzugswalze (28) dreht, unterscheidet, um zwischen zwei benachbarten zu umhüllenden Blattenden (30) einen Raum zum Verschließen sicherzustellen.

## Revendications

1. Appareil de production de corps d'emballage de feuille comportant :
une unité d'alimentation (1) d'une matière en feuille (6) soumise à un emballage;
une première unité de coupe (21);
une unité de transport (23);
une unité d'alimentation en matière de revêtement inférieur (3);
une unité d'alimentation en matière de revêtement supérieur (4);
une unité de scellage (24); et
une deuxième unité de coupe (25),
dans lequel,
ladite unité d'alimentation (1) d'une matière en feuille (6) soumise à un emballage délivre une bande de matière en feuille (6) soumise à l'emballage à ladite première unité de coupe (21);
ladite première unité de coupe (21) comprend une première paire de rouleaux en rotation (27, 28) et découpe des bouts de feuille (30) soumis à l'emballage dans ladite bande de la matière en feuille soumise à l'emballage,
ladite unité de transport transporte lesdits bouts de feuille (30) soumis à l'emballage fabriqués par ladite première unité de coupe sur une matière de revêtement inférieur (7) alors que ladite unité de transport maintient chaque dit bout de feuille soumis à l'emballage de telle sorte qu'aucun défaut d'alignement n'est provoqué,
ladite unité d'alimentation en matière de revêtement inférieur (3) délivre une bande de ladite matière de revêtement inférieur (7) sur une surface de transport (62) de ladite unité de transport, et ladite matière de revêtement inférieur (7) est en outre transportée vers une position éloignée au moyen de ladite unité de scellage (24) et de ladite deuxième unité de coupe (25),
ladite unité d'alimentation en matière de revêtement supérieur (4) délivre une bande d'une matière de revêtement supérieur (8) sur lesdits bouts de feuille (30) soumis à un emballage placés sur ladite matière de revêtement inférieur (7), et ladite matière de revêtement supérieur (8) est en outre transportée vers une position éloignée au moyen de ladite unité de scellage (24) et de ladite deuxième unité de coupe (25),
ladite unité de scellage (24) est prévue dans un étage suivant ladite unité de transport (23), comporte une deuxième paire de rouleaux en rotation (71, 72) et scelle ladite matière de revêtement supérieur (8) et ladite matière de revêtement inférieur (7) afin d'emballer lesdits bouts de feuille (30) soumis à un emballage de manière individuelle, et
ladite deuxième unité de coupe (25) comprend une troisième paire de rouleaux en rotation (81, 82) et découpe ladite matière de revêtement supérieur (8) et ladite matière de revêtement inférieur (7) dans une partie scellée fabriquée par ladite unité de scellage (24) et produit des corps d'emballage de feuille (100) qui enveloppent chacun de manière respective des bouts de feuille (30) soumis à l'emballage.

2. Appareil de production de corps d'emballage de feuille selon la revendication 1, dans lequel :
un rouleau de ladite première paire de rouleaux en rotation de ladite première unité de coupe est un premier rouleau d'attraction (28), ledit premier rouleau d'attraction (28) pouvant être entraîné en rotation tout en attirant lesdits bouts de feuille (30) soumis à l'emballage; et
ladite unité de transport comprend un deuxième rouleau d'attraction (22) opposé au dit premier rouleau d'attraction (28), de sorte que lesdits bouts de feuille (30) soumis à l'emballage sont délivrés depuis ledit premier rouleau d'attraction vers ledit deuxième rouleau d'attraction et transportés vers l'avant grâce à l'attraction.

3. Appareil de production de corps d'emballage de feuille selon la revendication 2, dans lequel ledit premier rouleau d'attraction (28) comprend des trous séparés de sections d'aspiration (39) le long d'une circonférence dudit premier rouleau d'attraction afin d'attirer lesdits bouts de feuille (30) soumis à l'emballage, lesdites sections d'aspiration ayant leurs ouvertures respectives (39b) sur une surface extérieure dudit premier rouleau d'attraction, une dépression étant délivrée seulement à certaines desdites sections d'aspiration (39) qui se sont déplacées dans une plage où lesdits bouts de feuille (30) soumis à l'emballage sont attirés.

4. Appareil de production de corps d'emballage de feuille selon la revendication 3, dans lequel une pression positive est délivrée seulement à au moins une desdites sections d'aspiration (39) qui s'est déplacée sur une plage où lesdits bouts de feuille soumis à l'emballage sont délivrés au dit deuxième rouleau d'attraction (22).

5. Appareil de production de corps d'emballage de feuille selon la revendication 2, dans lequel ledit deuxième rouleau d'attraction (22, 52) comprend des trous séparés de sections d'aspiration (58) le long d'une circonférence dudit deuxième rouleau d'attraction afin d'attirer lesdits bouts de feuille (30) soumis à l'emballage, lesdites sections d'aspiration (58) ayant leurs ouvertures respectives (58b) sur une surface extérieure dudit deuxième rouleau d'attraction, une dépression étant délivrée seulement à certaines desdites sections d'aspiration (58) qui se sont déplacées dans une plage où les bouts de feuille soumis à l'emballage sont attirés.

6. Appareil de production de corps d'emballage de feuille selon l'une quelconque des revendications 2 à 5,
dans lequel ledit premier rouleau d'attraction (28) et ledit deuxième rouleau d'attraction (22, 52) tournent à des vitesses périphériques différentes, de sorte que lesdits bouts de feuille (30) soumis à l'emballage sont transportés vers l'avant à des intervalles réguliers.

7. Appareil de production de corps d'emballage de feuille selon l'une quelconque des revendications 2 à 6,
dans lequel :
ladite unité de transport (23) comprend, au niveau d'un étage qui suit ledit deuxième rouleau d'attraction (22, 52), une unité de bande de transport supérieure (61) et une unité de bande de transport inférieure (62), ladite unité de bande de transport supérieure et ladite unité de bande de transport inférieure étant opposées l'une à l'autre verticalement afin de permettre la fixation desdits bouts de feuille (30) soumis à l'emballage;
ladite matière de revêtement inférieur (7) est délivrée sur une surface de transport de ladite unité de bande de transport inférieure (62);
une surface extérieure dudit deuxième rouleau d'attraction (52) est plus petite en largeur que chaque dit bout de feuille (30) soumis à l'emballage, la surface extérieure étant opposée à ladite unité de bande de transport inférieure (62); et
ladite unité de bande de transport supérieure (61) comprend au moins une bande (61a) le long de chacune des deux surfaces latérales opposées dudit deuxième rouleau d'attraction (52), un intervalle desdites bandes étant plus petit en largeur que chaque dit bout de feuille (30) soumis à l'emballage.

8. Appareil de production de corps d'emballage de feuille selon l'une quelconque des revendications 1 à 7,
dans lequel :
ladite unité de transport (23) comprend une unité de transport supérieure (61) et une unité de transport inférieure (62), ladite unité de transport supérieure et ladite unité de transport inférieure étant opposées l'une à l'autre verticalement afin de permettre la fixation desdits bouts de feuille (30) soumis à l'emballage, une partie d'extrémité aval de ladite unité de transport inférieure (62) par rapport à une direction dans laquelle lesdits bouts de feuille (30) soumis à l'emballage sont transportés s'étendant dans ladite direction comparée à une partie d'extrémité correspondante de ladite unité de transport supérieure (61);
ladite matière de revêtement inférieur (7) est délivrée sur une surface de transport de ladite unité de transport inférieure (62);
ladite unité d'alimentation en matière de revêtement supérieur (4) comprend un rouleau de guidage (63) destiné à guider ladite matière de revêtement supérieure sur lesdits bouts de feuille soumis à l'emballage placés sur ladite unité de transport inférieure, ledit rouleau (63) étant prévu au-dessus de ladite unité de transport inférieure (62) au niveau d'un courant inférieur par rapport à une direction dans laquelle lesdits bouts de feuille (30) soumis à l'emballage sont transportés par ladite unité de transport supérieure (61), ledit rouleau de guidage (63), avec ladite unité de transport inférieure (62), transportant lesdits bouts de feuille (30) soumis à l'emballage tout en fixant lesdits bouts de feuille soumis à l'emballage, ledit rouleau de guidage (63) étant prévu dans une position qui permet la fixation d'une partie d'extrémité supérieure de chaque dit bout de feuille (30) soumis à l'emballage avec ladite unité de transport inférieure (62) alors qu'une partie d'extrémité inférieure de celle-ci est fixée par ladite unité de transport inférieure et ladite unité de transport supérieure.

9. Appareil de production de corps d'emballage de feuille selon la revendication 1, dans lequel :
ladite première unité de coupe (21) découpe lesdits bouts de feuille (30) soumis à l'emballage dans ladite matière de feuille soumise à l'emballage en utilisant ladite première paire de rouleaux en rotation (27, 28) dans une direction dans laquelle ladite première paire de rouleaux en rotation tourne sans laisser d'espace indésirable quelconque entre deux bouts de feuille (30) adjacents soumis à l'emballage, un rouleau de ladite première paire de rouleau en rotation servant de premier rouleau d'attraction (28) capable de tourner tout en attirant lesdits bouts de feuille soumis à l'emballage,
un deuxième rouleau d'attraction (22) est placé afin d'être opposé au dit premier rouleau d'attraction (28), ledit deuxième rouleau d'attraction transportant lesdits bouts de feuille soumis à l'emballage délivré depuis ledit premier rouleau d'attraction vers ladite unité de transport (23) grâce à l'attraction, ledit premier rouleau d'attraction (28) et ledit deuxième rouleau d'attraction (22) tournant à des vitesses périphériques différentes, de sorte que deux bouts de feuille (30) adjacents soumis à l'emballage ont un espace aussi grand qu'une partie scellée fabriquée par ladite unité de scellage (24).

10. Appareil de production de corps d'emballage de feuille selon l'une quelconque des revendications 1 à 9, comportant en outre :
des premiers moyens de détection de défaut (233) destinés à détecter un défaut dans lesdites matières délivrées;
des premiers moyens d'enlèvement (212) destinés à enlever un corps d'emballage de feuille défectueux provoqué par un défaut détecté par lesdits premiers moyens de détection de défaut;
des seconds moyens de détection de défaut (213) destinés à détecter un défaut des corps d'emballage de feuille, ledit deuxième corps de détection de défaut étant prévu dans un étage qui suit lesdits premiers moyens d'enlèvement; et
des seconds moyens d'enlèvement (214) destinés à enlever un corps d'emballage de feuille détecté comme étant défectueux par lesdits seconds moyens de détection de défaut.

11. Appareil de production de corps d'emballage de feuille selon la revendication 10, dans lequel :
ladite bande de la matière soumis à l'emballage est une feuille; et
lesdits premiers moyens de détection de défaut (233a, b, c) détectent un cordon reliant la matière en feuille soumise à l'emballage et une autre matière en feuille soumise à l'emballage délivrée aux dits moyens de production de corps d'emballage de feuille.

12. Appareil de production de corps d'emballage de feuille selon la revendication 10 ou 11, dans lequel :
ladite bande de la matière de revêtement est une matière de revêtement inférieur (7); et
lesdits premiers moyens de détection de défaut (233a, b, c) détectent un cordon reliant la matière de revêtement inférieure et une autre matière de revêtement inférieure délivrée aux dits moyens de production de corps d'emballage de feuille.

13. Appareil de production de corps d'emballage de feuille selon la revendication 10 ou 11, dans lequel :
ladite bande de la matière de revêtement est une matière de revêtement supérieur (8); et
lesdits premiers moyens de détection de défaut (233a, b, c) détectent un cordon reliant la matière de revêtement supérieure et une autre matière de revêtement supérieure délivré aux dits moyens de production de corps d'emballage de feuille.

14. Appareil de production de corps d'emballage de feuille selon la revendication 10 ou 11, dans lequel :
ladite bande de matière de revêtement est une matière de revêtement inférieur (7); et
lesdits premiers moyens de détection de défaut (234a) détectent un défaut d'alignement par rapport à une position normale de ladite matière de revêtement inférieur (7) délivrée aux dits moyens de production de corps d'emballage de feuille.

15. Appareil de production de corps d'emballage de feuille selon la revendication 10 ou 11, dans lequel :
ladite bande de la matière de revêtement est une matière de revêtement supérieur (8); et
lesdits premiers moyens de détection de défaut (234b) détectent un défaut d'alignement par rapport à une position normale de ladite matière de revêtement supérieure délivrée aux dits moyens de production de corps d'emballage de feuille.

16. Appareil de production de corps d'emballage de feuille selon la revendication 10, dans lequel :
ladite bande de la matière soumise à l'emballage est une feuille;
lesdits moyens de production de corps d'emballage de feuille découpent des bouts de feuille (30) soumis à l'emballage dans ladite matière de feuille soumise à l'emballage, transportent lesdits bouts de feuille soumis à l'emballage avec des pas réguliers, emballent lesdits bouts de feuille soumis à l'emballage dans ladite matière de revêtement, et découpent des corps d'emballage de feuille dans un corps emballé résultant aux dits pas réguliers; et
lesdits premiers moyens de détection de défaut (233d) détectent si un pas entre deux corps d'emballage de feuille adjacents varie par rapport au dit pas régulier ou non.

17. Appareil de production de corps d'emballage de feuille selon l'une quelconque des revendications 10 à 16, dans lequel lesdits seconds moyens de détection de défaut (213) captent une image de chaque dit corps d'emballage de feuille et estiment si le corps d'emballage de feuille en question est défectueux ou non sur la base de son image.

18. Appareil de production de corps d'emballage de feuille selon l'une quelconque des revendications 10 à 17, dans lequel au moins un desdits premiers moyens d'enlèvement (212) et desdits seconds moyens d'enlèvement (214) comprend :
des moyens d'enlèvement en rotation (239, 241) destinés à enlever un corps d'emballage de feuille défectueux en amenant une partie en rotation de celui-ci en contact avec ledit corps d'emballage de feuille défectueux; et
des moyens d'entraînement (237) destinés à amener lesdits moyens d'enlèvement en rotation en contact avec le corps d'emballage de feuille défectueux et destinés à maintenir lesdits moyens d'enlèvement en rotation séparés d'un corps d'emballage de feuille non défectueux soumis à un transport supplémentaire.

19. Appareil de production de corps d'emballage de feuille selon l'une quelconque des revendications 1 à 18, comportant en outre :
des moyens d'alignement et de transport (215) comprenant une paire de vis d'alignement (276, 277), chaque dite vis d'alignement ayant une série de lames en spirale (276a, 277a), lesdites vis d'alignement étant alignées en parallèle avec un espace prédéterminé entre elles, et
des moyens de transport destinés à transporter chaque dit corps d'emballage de feuille (100) en position horizontale et destinés à transporter chaque dit corps d'emballage de feuille dans l'espace entre ladite paire de vis d'alignement (276, 277) en position verticale,
dans lequel,
lesdits moyens d'alignement et de transport maintiennent une partie latérale de chaque dit corps d'emballage de feuille (100) entre les lames (276a) d'une desdites vis d'alignement et l'autre partie latérale entre les lames (277a) de l'autre vis d'alignement afin de maintenir chaque dit corps d'emballage de feuille en position verticale dans l'espace entre ladite paire de vis d'alignement; et
ladite paire de vis d'alignement (276, 277) est entraînée en rotation afin de transporter les corps d'emballage de feuille dans une direction dans laquelle lesdits corps d'emballage de feuille doivent être transportés.

20. Appareil de production de corps d'emballage de feuille selon la revendication 19, dans lequel lesdits moyens d'alignement et de transport (215) comprennent en outre :
un guide de partie latérale (278) destiné à guider les deux parties latérales du corps d'emballage de feuille qui sont passées par une partie d'extrémité de ladite paire de vis d'alignement lorsque ladite paire de vis d'alignement tourne; et
des moyens de support (272) destinés à supporter une extrémité supérieure d'un corps d'emballage de feuille de tête (100) des corps d'emballage de feuille qui sont transportés, de sorte que lesdits corps d'emballage de feuille ne basculent pas dans une direction dans laquelle lesdits corps d'emballage de feuille sont transportés.

21. Appareil de production de corps d'emballage de feuille selon la revendication 19, dans lequel lesdits moyens d'alignement et de transport (215) comprennent en outre :
des moyens de comptage (217, 279) destinés à compter le nombre des corps d'emballage de feuille transportés dans l'espace entre ladite paire de vis d'alignement par lesdits moyens de transport; et
des moyens de séparation (281), lorsque lesdits moyens de comptage comptent une valeur prédéterminée, destinés à séparer les corps d'emballage de feuille (100) en un groupe ayant autant de corps d'emballage de feuille que ladite valeur prédéterminée, et destinés à transporter ledit groupe de corps d'emballage de feuille vers une position prédéterminée.

22. Procédé de fabrication d'un corps d'emballage de feuille comportant les étapes consistant à :
découper des bouts de feuille (30) soumis à un emballage dans une bande d'une matière en feuille (6) soumise à un emballage en utilisant une première paire de rouleaux en rotation (27, 28);
transporter lesdits bouts de feuille soumis à l'emballage sur une bande d'une matière de revêtement inférieur (7) tout en maintenant chaque dit bout de feuille soumis à l'emballage afin de ne pas provoquer de défaut d'alignement;
délivrer une bande d'une matière de revêtement supérieur (8) sur lesdits bouts de feuille soumis à un emballage prévus sur ladite matière de revêtement inférieur;
sceller ladite matière de revêtement supérieur (8) et ladite matière de revêtement inférieur (7) afin d'emballer lesdits bouts de feuille (30) soumis à un emballage de manière individuelle en utilisant une deuxième paire de rouleaux en rotation (71, 72); et
produire des corps d'emballage de feuille qui emballent chacun respectivement les bouts de feuille soumis à l'emballage en découpant ladite matière de revêtement supérieure et ladite matière de revêtement inférieure dans une partie scellée fabriquée dans ladite étape de scellage en utilisant une troisième paire de rouleaux rotatifs (81, 82).

23. Procédé de fabrication d'un corps d'emballage de feuille selon la revendication 22, dans lequel
lesdits bouts de feuille (30) soumis à l'emballage provenant d'une bande d'une matière de feuille soumise à l'emballage sont découpés en utilisant une première paire de rouleaux en rotation (27, 28) dans une direction dans laquelle ladite première paire de rouleaux en rotation tourne sans laisser d'espace indésirable entre deux bouts de feuille adjacents soumis à l'emballage; et comportant en outre des étapes consistant à :
attirer lesdits bouts de feuille soumis à l'emballage en utilisant un rouleau de ladite première paire de rouleaux en rotation comme premier rouleau d'attraction (28) et transporter lesdits bouts de feuille soumis à l'emballage vers l'avant; et
délivrer lesdits bouts de feuille soumis à l'emballage qui sont attirés vers ledit premier rouleau d'attraction (28) vers un deuxième rouleau d'attraction (22) capable d'attirer lesdits bouts de feuille soumis à l'emballage tout en tournant à une vitesse périphérique différente d'une vitesse périphérique à laquelle ledit premier rouleau d'attraction (28) tourne afin d'assurer un espace pour le scellage entre deux bouts de feuille (30) soumis à l'emballage.
